# EUROPÄISCHE PATENTSCHRIFT

(11) **EP 4 350 191 B1**
(45) Veröffentlichungstag und Bekanntmachung des Hinweises auf die Patenterteilung: **17.12.2025**
(21) Anmeldenummer: 23199610.9
(22) Anmeldetag: 26.09.2023
(51) Int. Cl.: F16L 55/07, F16L 55/124, F16L 55/18

(54) **BLASENSETZVORRICHTUNG UND VERFAHREN ZUR VERWENDUNG EINER BLASENSETZVORRICHTUNG**
BUBBLE SETTING APPARATUS AND METHOD OF USING A BUBBLE SETTING APPARATUS
DISPOSITIF DE MISE EN PLACE DE BULLES ET PROCÉDÉ D'UTILISATION D'UN DISPOSITIF DE MISE EN PLACE DE BULLES

(30) Priorität: 05.10.2022 DE 102022125589
(43) Veröffentlichungstag der Anmeldung: 10.04.2024
(73) Patentinhaber: Westnetz GmbH, 44139 Dortmund (DE)
(72) Erfinder: Ewering, Dietmar, 48565 Steinfurt (DE); Klüßendorf, Sven, 58454 Witten (DE); Peters, Klaus, 46483 Wesel (DE)
(74) Vertreter: Bals & Vogel Patentanwälte PartGmbB

(56) Entgegenhaltungen:
- WO-A1-95/15459
- DE-C2- 3 726 258
- US-A- 4 144 908
- US-A- 5 462 077

## Beschreibung

Die Erfindung betrifft eine Blasensetzvorrichtung mit den Merkmalen des unabhängigen Patentanspruchs 1, eine Blasensetzvorrichtung mit den Merkmalen des unabhängigen Patentanspruchs 2, ein System mit den Merkmalen des unabhängigen Patentanspruchs 10, ein Verfahren mit den Merkmalen des unabhängigen Patentanspruchs 11 sowie ein Verfahren mit den Merkmalen des unabhängigen Patentanspruchs 12**.**

Gasnetze, wie sie zur Verteilung von Erdgas an Industrie und Haushalte betrieben werden, sind weit verzweigt und bedürfen regelmäßiger Wartungs- und Reparaturarbeiten. Um eine gefahrlose Durchführung der Arbeiten gewährleisten zu können, müssen die von den Arbeiten betroffenen Leitungsabschnitte zunächst geleert werden, um eine versehentliche Entzündung des darin geführten Erdgases zu verhindern. Hierzu muss der Gasfluss in dem betreffenden Leitungsabschnitt zunächst gestoppt und der Leitungsdruck anschließend reduziert bzw. das in dem Leitungsabschnitt enthaltene Gas entnommen werden. Hierzu werden Blasensetzvorrichtungen verwendet, wie sie beispielsweise aus der

US 4 144 908 A, der DE 37 26 258 C2, der EP 0197295 oder der DE 19846088 A1 bekannt sind. Eine Blasensetzvorrichtung wird auf eine in die Gasleitung eingebrachte Bohrung derart aufgesetzt bzw. abschnittsweise in die Bohrung und/oder die Gasleitung eingebracht, dass ein ungewollter Gaseintritt in die Umgebung unterbunden wird. Anschließend ermöglicht die Blasensetzvorrichtung eine Einbringung wenigstens einer Absperrblase in den Innenraum der Gasleitung. Dabei wird die Absperrblase in einem leeren Zustand in die Rohrleitung eingeführt und anschließend mit Druckluft oder einem anderen unter Druck stehenden Gas gefüllt. Hierdurch bläht sich die Absperrblase im Inneren der Gasleitung auf und bewirkt eine Unterbrechung des Gasflusses. Wird nun eine weitere Blasensetzvorrichtung in gleicher Weise an einer anderen Position entlang der betreffenden Rohrleitung angebracht, so kann in dem zwischen den Blasensetzvorrichtungen eingeschlossenen Leitungsabschnitt anschließend der Leitungsdruck reduziert und das darin geführte Erdgas aus der Leitung entfernt werden. Bei Stichleitungen kann ein solcher zu entleerender bzw. zumindest teilweise entleerbarer Leitungsabschnitt auch bereits durch das Setzen von nur einer Blasensetzvorrichtung realisiert werden, wobei sich der betreffende Abschnitt zwischen der Blasensetzvorrichtung und einem verschlossenen Ende der Gasleitung erstreckt.

Bei der Druckreduzierung bzw. dem Entleeren eines betreffenden Gasleitungsabschnittes wird das in dem betreffenden Leitungsabschnitt enthaltene Erdgas unbehandelt in die Umgebung abgelassen und gelangt so in die Atmosphäre. Problematisch dabei ist, dass insbesondere das als Hauptbestandteil in dem Erdgas enthaltene Methan eine äußerst hohe Umwelt- bzw. Klimaschädlichkeit aufweist.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, eine Blasensetzvorrichtung vorteilhaft weiterzubilden und/oder eine Blasensetzvorrichtung sowie ein Verfahren zur Verwendung einer Blasensetzvorrichtung bereitzustellen, durch die ein unkontrollierter Austritt von Erdgas in die Atmosphäre bei dem zumindest teilweisen Entleeren von Gasleitungssegmenten bzw. Gasleitungsabschnitten zumindest teilweise vermieden werden kann.

Die voranstehende Aufgabe wird gelöst durch eine Blasensetzvorrichtung mit den Merkmalen des unabhängigen Patentanspruchs 1, eine Blasensetzvorrichtung mit den Merkmalen des unabhängigen Patentanspruchs 2, durch ein System mit den Merkmalen des unabhängigen Patentanspruchs 10, durch ein Verfahren mit den Merkmalen des unabhängigen Patentanspruchs 11 sowie durch ein Verfahren mit den Merkmalen des unabhängigen Patentanspruchs 12. Weitere Merkmale und Details der Erfindung ergeben sich aus den Unteransprüchen, der Beschreibung und den Zeichnungen. Dabei gelten Merkmale und Details, die im Zusammenhang mit einer der erfindungsgemäßen Blasensetzvorrichtungen beschrieben sind, selbstverständlich auch im Zusammenhang mit dem erfindungsgemäßen System und/oder im Zusammenhang mit den erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist eine Blasensetzvorrichtung zum zumindest temporären Sperren und/oder zumindest abschnittsweisen Entleeren wenigstens einer fluidführenden Rohrleitung, insbesondere eines fluidführenden Rohrleitungsabschnittes, umfassend wenigstens einen Auffangbehälter zum zumindest teilweisen Auffangen eines durch die Blasensetzvorrichtung aus der fluidführenden Rohrleitung, insbesondere aus dem fluidführenden Rohrleitungsabschnitt, herausleitbaren bzw. herausgeleiteten Fluidstroms. In anderen Worten ist es vorgesehen, dass eine erfindungsgemäße Blasensetzvorrichtung einen Auffangbehälter umfasst, wobei ein durch die Blasensetzvorrichtung aus einer fluidführenden Rohrleitung bzw. einem fluidführenden Rohrleitungsabschnitt herausleitbarer Fluidstrom durch die Blasensetzvorrichtung in das Innere wenigstens eines Auffangbehälters leitbar ist bzw. in wenigstens einem Auffangbehälter auffangbar ist.

Durch eine erfindungsgemäße Blasensetzvorrichtung mit wenigstens einem Auffangbehälter ergibt sich der Vorteil, dass das in einem fluidführenden Rohrleitungsabschnitt durch wenigstens eine Blasensetzvorrichtung, insbesondere zwei Blasensetzvorrichtungen, eingeschlossene Fluid, insbesondere Erdgas, nicht unkontrolliert bzw. unbehandelt in die Umgebung entweicht, wenn der betreffende Rohrleitungsabschnitt als Vorbereitung für durchzuführende Wartungs- und/oder Reparaturarbeiten zumindest teilweise entleert bzw. der Innendruck in dem Leitungsabschnitt reduziert wird. Vielmehr kann das aus der Rohrleitung herausgeleitete Fluid, insbesondere Erdgas, in dem Auffangbehälter aufgefangen und anschließend einer weiteren Verwendung und/oder kontrollierten Entsorgung zugeführt werden. Auch ist es denkbar, dass das Fluid nach Beendigung der Arbeiten an der Rohrleitung aus dem Auffangbehälter wieder in die Rohrleitung zurückgeführt wird.

Erfindungsgemäß vorgesehen ist ferner eine Blasensetzvorrichtung zum zumindest temporären Sperren und/oder zumindest abschnittsweisen Entleeren wenigstens einer fluidführenden Rohrleitung, insbesondere eines fluidführenden Rohrleitungsabschnittes, umfassend wenigstens eine Gasfackel zum zumindest teilweisen Abbrennen eines durch die Blasensetzvorrichtung aus der fluidführenden Rohrleitung, insbesondere aus dem fluidführenden Rohrleitungsabschnitt, herausleitbaren bzw. herausgeleiteten Fluidstroms. In anderen Worten ist es vorgesehen, dass eine erfindungsgemäße Blasensetzvorrichtung wenigstens eine Gasfackel umfasst, wobei ein durch die Blasensetzvorrichtung aus einer fluidführenden Rohrleitung bzw. einem fluidführenden Rohrleitungsabschnitt herausleitbarer Fluidstrom durch die Blasensetzvorrichtung zu wenigstens einer Gasfackel leitbar ist und von der Gasfackel zumindest teilweise verbrennbar ist.

Durch eine erfindungsgemäße Blasensetzvorrichtung mit wenigstens einer Gasfackel ergibt sich der Vorteil, dass das in einem fluidführenden Rohrleitungsabschnitt durch wenigstens eine Blasensetzvorrichtung, insbesondere zwei Blasensetzvorrichtungen, eingeschlossene Fluid, insbesondere Erdgas, nicht unkontrolliert bzw. unbehandelt in die Umgebung entweicht, wenn der betreffende Rohrleitungsabschnitt als Vorbereitung für durchzuführende Wartungs- und/oder Reparaturarbeiten zumindest teilweise entleert bzw. der Innendruck in dem Leitungsabschnitt reduziert wird. Vielmehr kann das aus der Rohrleitung herausgeleitete Fluid, insbesondere Erdgas, durch die Gasfackel kontrolliert verbrannt werden. Hierdurch gelangen zwar die durch die Verbrennung entstehenden Verbrennungsprodukte wie bspw. CO2 in die Atmosphäre, jedoch nicht das unbehandelte Fluid bzw. Erdgas, wodurch die Umwelt- bzw. Klimaschädlichkeit gegenüber einer unbehandelten Abgabe des Fluids bzw. Erdgases an die Atmosphäre deutlich verringert werden kann.

Es kann insbesondere vorgesehen sein, dass die fluidführende Rohrleitung eine erdgasführende Rohrleitung ist bzw. das in der Rohrleitung geführte Fluid ein Erdgas ist. Ferner ist es denkbar, dass das Methan ein Hauptbestandteil des Erdgases ist. Insbesondere kann es vorgesehen sein, dass das Erdgas einen Methananteil von wenigstens 70 %, vorzugsweise wenigstens 80 %, besonders bevorzugt wenigstens 85 % aufweist (alle Angaben in Volumenprozent). Die Verwendung einer erfindungsgemäßen Blasensetzvorrichtung in Verbindung mit anderen, insbesondere umwelt- und/oder klimaschädlichen, Fluiden bzw. Gasen ist prinzipiell ebenfalls vom Gedanken der Erfindung umfasst.

Erfindungsgemäß kann vorgesehen sein, dass eine Blasensetzvorrichtung zum zumindest temporären Sperren und/oder zumindest abschnittsweisen Entleeren wenigstens einer fluidführenden Rohrleitung, insbesondere eines fluidführenden Rohrleitungsabschnittes, wenigstens einen Auffangbehälter zum zumindest teilweisen Auffangen eines durch die Blasensetzvorrichtung aus der fluidführenden Rohrleitung, insbesondere aus dem fluidführenden Rohrleitungsabschnitt, herausleitbaren Fluidstroms und wenigstens eine Gasfackel zum zumindest teilweisen Abbrennen eines durch die Blasensetzvorrichtung aus der fluidführenden Rohrleitung, insbesondere aus dem fluidführenden Rohrleitungsabschnitt, herausleitbaren Fluidstroms umfasst.

Es kann im Rahmen der Erfindung vorgesehen sein, dass die Blasensetzvorrichtung wenigstens eine Abgasleitung umfasst, wobei wenigstens ein erstes Ende der Abgasleitung in Fluidkommunikation mit dem Innenraum der fluidführenden Rohrleitung bzw. dem in der fluidführenden Rohrleitung geführten Fluid, insbesondere Erdgas, steht bzw. bringbar ist und wenigstens ein zweites Ende der Abgasleitung in Fluidkommunikation mit wenigstens einem Auffangbehälter, insbesondere einem Innenraum des Auffangbehälters, und/oder wenigstens einer Gasfackel bzw. einer Mischungsvorrichtung steht bzw. bringbar ist. In anderen Worten kann es vorgesehen sein, dass die Blasensetzvorrichtung wenigstens eine Abgasleitung zum Herausleiten eines Fluidstroms aus der fluidführenden Rohrleitung bzw. dem fluidführenden Rohrleitungsabschnitt umfasst. Hierzu ist wenigstens ein Ende der Abgasleitung derart angeordnet, dass es durch ein Aufsetzen der Blasensetzvorrichtung auf bzw. ein Anordnen der Blasensetzvorrichtung an der fluidführenden Rohrleitung in Fluidkommunikation mit dem Innenraum der fluidführenden Rohrleitung bzw. dem in der fluidführenden Rohrleitung geführten Fluid, insbesondere Erdgas, bringbar ist, sodass vorzugsweise das in der fluidführenden Rohrleitung geführte Fluid zumindest teilweise in die Abgasleitung einströmen kann. Wenigstens ein weiteres Ende der Abgasleitung ist mit wenigstens einem Auffangbehälter und/oder wenigstens einer Gasfackel in Fluidkommunikation bringbar, sodass ein aus der fluidführenden Rohrleitung durch die Abgasleitung herausgeleitetes Fluid zu bzw. in den Auffangbehälter bzw. zu der Gasfackel geleitet werden kann.

Wenigstens eine Abgasleitung kann mehrteilig ausgebildet sein. In anderen Worten kann es vorgesehen sein, dass wenigstens eine Abgasleitung zumindest abschnittsweise unterbrochen wird bzw. dass weitere Komponenten, insbesondere wenigstens ein Sensorelement, wenigstens eine Fluidfördervorrichtung und/oder wenigstens eine Mischungsvorrichtung, in die Abgasleitung integriert bzw. an diese angeschlossen sind.

Ferner ist es denkbar, dass an der Abgasleitung wenigstens eine Absperrvorrichtung angeordnet ist, mit dem ein Fluidstrom in der Abgasleitung zumindest abschnittsweise unterbunden werden kann. In anderen Worten kann es vorgesehen sein, dass die Abgasleitung wenigstens eine Absperrvorrichtung umfasst, wobei ein Fluidstrom, insbesondere Gasstrom, durch die Abgasleitung durch die Absperrvorrichtung zumindest temporär und/oder zumindest abschnittsweise unterbrochen bzw. unterbunden werden kann. Hierdurch ergibt sich der Vorteil, dass ein Austritt von Fluid aus der Abgasleitung gezielt verhindert werden kann, da ohne eine Absperrvorrichtung ein kontinuierlicher Austritt des Fluids aus der Abgasleitung erfolgen würde, zumindest solange in der Rohrleitung ein gegenüber der Umgebung erhöhter Druck anliegt. Auch ermöglicht eine Absperrvorrichtung den einfachen Wechsel eines Auffangbehälters bzw. einer Gasfackel an der Blasensetzvorrichtung, ohne dass während der Durchführung des Wechsels Fluid aus der Abgasleitung in die Umgebung entweicht. Wenigstens eine Absperrvorrichtung kann zumindest teilweise als ein Kugelhahn, eine Absperrklappe, ein Absperrschieber oder ein Absperrventil ausgebildet sein bzw. wenigstens eine Absperrvorrichtung kann wenigstens einen Kugelhahn, wenigstens eine Absperrklappe, wenigstens einen Absperrschieber und/oder wenigstens ein Absperrventil umfassen. Insbesondere durch die Verwendung wenigstens eines Kugelhahns ergibt sich der Vorteil einer zuverlässigen Dicht- bzw. Absperrwirkung bei gleichzeitig geringen Kosten.

Es kann vorgesehen sein, dass die Abgasleitung zumindest abschnittsweise einen konstanten Durchmesser aufweist, wodurch sich der Vorteil einer zumindest abschnittsweise konstanten Fluidgeschwindigkeit in der Abgasleitung und einer einfacheren und genaueren Erfassung von Fluidparametern wie bspw. Druck, Temperatur, Volumenstrom, Massenstrom, Gesamtvolumen oder Gesamtmasse des aus der fluidführenden Rohrleitung herausgeleiteten Fluids ergibt.

Ferner ist es denkbar, dass die Abgasleitung zumindest eine Druckminderungsvorrichtung umfasst, wobei durch die Druckminderungsvorrichtung ein Druck eines in der Abgasleitung geführten Fluidstroms zumindest teilweise reduzierbar ist. Hierdurch ergibt sich der Vorteil, dass der Druck des aus der Abgasleitung austretenden Fluidstroms auf nachfolgende Anwendungen wie bspw. ein zumindest teilweises Abbrennen des Fluidstroms in einer Gasfackel anpassbar ist. So kann ein hoher Druck in der fluidführenden Rohrleitung hohe Strömungsgeschwindigkeiten in der Gasfackel bedingen, die eine stabile Verbrennung erschweren. Wenigstens eine Druckminderungsvorrichtung kann als ein Drosselventil ausgebildet sein. Wenigstens eine Druckminderungsvorrichtung kann zumindest teilweise durch eine Steuereinheit der Blasensetzvorrichtung steuerbar sein. So kann bspw. ein Druck in der Abgasleitung hinter der Druckminderungsvorrichtung erfasst und die Druckminderungsvorrichtung derart gesteuert werden, dass der Druck hinter der Druckminderungsvorrichtung einem vorgegebenen Zielwert entspricht bzw. im Wesentlichen entspricht und/oder zumindest solange konstant gehalten wird, bis der Leitungsdruck in der Abgasleitung vor der Druckminderungsvorrichtung den Zielwert unterschreitet.

Im Rahmen der Erfindung ist vorgesehen, dass wenigstens ein Sensorelement umfasst ist, wobei durch das Sensorelement wenigstens ein Volumen bzw. ein Volumenstrom und/oder eine Fließgeschwindigkeit des aus der fluidführenden Rohrleitung herausgeleiteten Fluidstroms, vorzugsweise kontinuierlich bzw. quasi kontinuierlich, insbesondere in der Abgasleitung, erfassbar ist. In anderen Worten ist vorgesehen, dass das Sensorelement den durch die Abgasleitung in den Auffangbehälter und/oder zu einer Gasfackel geleiteten Volumenstrom des herausgeleiteten Fluids und/oder die Fließgeschwindigkeit des herausgeleiteten Fluids, vorzugsweise zeitaufgelöst, erfasst. So kann, während das Fluid aus der fluidführenden Rohrleitung, insbesondere durch die Abgasleitung, in den Auffangbehälter und/oder zu der Gasfackel geleitet wird, der Volumenstrom und/oder die Fließgeschwindigkeit des Fluidstroms kontinuierlich oder quasi kontinuierlich durch das Sensorelement überwacht werden. Es kann ferner vorgesehen sein, dass durch eine kumulative Auswertung der, vorzugsweise zeitaufgelösten, Messwerte das insgesamt aus der fluidführenden Rohrleitung bzw. dem fluidführenden Rohrleitungsabschnitt entfernte Gasvolumen zuverlässig ermittelt wird.

Es kann vorgesehen sein, dass wenigstens ein Sensorelement zur Erfassung eines Volumens bzw. Volumenstroms als ein Durchflusssensor ausgebildet ist, wobei der Durchflusssensor dazu ausgebildet ist, eine Strömungsgeschwindigkeit bzw. Durchflussgeschwindigkeit, vorzugsweise in der Abgasleitung, zu erfassen. Durch eine Erfassung der Strömungsgeschwindigkeit bzw. Durchflussgeschwindigkeit kann unter Kenntnis des Strömungsquerschnittes bzw. des Innenquerschnittes der Abgasleitung unmittelbar der Volumenstrom als Produkt aus Strömungsgeschwindigkeit und Querschnittsfläche berechnet werden. Wenigstens ein Durchflusssensor kann als ein magnetisch-induktiver Durchflusssensor oder ein Ultraschalldurchflusssensor ausgebildet sein. Durch die Verwendung eines Ultraschalldurchflusssensors oder eines magnetisch induktiven Durchflusssensors ergibt sich der Vorteil einer besonders zuverlässigen Bestimmung der Durchflussgeschwindigkeit. Auch kann wenigstens ein Durchflusssensor derart ausgebildet sein, dass er nach dem Differenzdruckprinzip arbeitet, vorzugsweise als Pitot-Rohr, Prandtlsonde oder Messblende. Auch kann wenigstens ein Durchflusssensor als ein volumetrischer Durchflusssensor, insbesondere ein Schwebekörper-Durchflusssensor ausgebildet sein.

Wenigstens ein Sensorelement zur Erfassung eines Volumens bzw. Volumenstroms kann in die Abgasleitung integriert sein bzw. einen Abschnitt der Abgasleitung bilden. In anderen Worten kann es vorgesehen sein, dass die Abgasleitung zumindest abschnittsweise unterbrochen ist und/oder das Sensorelement einen rohrförmigen Abschnitt aufweist, wobei der rohrförmige Abschnitt des Sensorelements an einer ersten Seite mit einem ersten Teil der Abgasleitung verbunden ist, sodass ein Fluid bzw. ein Fluidstromaus aus dem ersten Teil der Abgasleitung in den rohrförmigen Abschnitt des Sensorelements einströmen kann und wobei der rohrförmige Abschnitt an einer zweiten Seite mit einem zweiten Teil der Abgasleitung verbunden ist, sodass ein Fluid bzw. ein Fluidstrom aus dem rohrförmigen Abschnitt des Sensorelements in den zweiten Abschnitt der Abgasleitung ausströmen kann. Die Messung bzw. Erfassung wenigstens des Volumens bzw. Volumenstroms und/oder anderer Messgrößen kann zumindest teilweise in dem rohrförmigen Abschnitt des Sensorelements erfolgen.

Es kann im Rahmen der Erfindung vorgesehen sein, dass wenigstens ein Sensorelement umfasst ist, wobei durch das Sensorelement wenigstens eine Temperatur und/oder ein Druck und/oder eine Dichte des aus der fluidführenden Rohrleitung herausgeleiteten Fluidstroms, vorzugsweise kontinuierlich bzw. quasi kontinuierlich, insbesondere in der Abgasleitung, erfassbar ist. Hierdurch ergibt sich der Vorteil, dass unter zusätzlicher Verwendung eines bekannten Volumenstroms ein zugehöriger Massenstrom ermittelt werden kann. Es kann ferner vorgesehen sein, dass durch eine kumulative Auswertung der, vorzugsweise zeitaufgelösten, Messwerte des Massenstroms die Gesamtmasse des aus der fluidführenden Rohrleitung bzw. dem fluidführenden Rohrleitungsabschnitt, insbesondere durch die Abgasleitung, herausgeleiteten Fluidstroms ermittelt wird.

Im Rahmen der Erfindung ist es denkbar, dass wenigstens ein Sensorelement umfasst ist, wobei durch das Sensorelement wenigstens eine Masse bzw. ein Massenstrom des aus der fluidführenden Rohrleitung herausgeleiteten Fluidstroms, vorzugsweise kontinuierlich bzw. quasi kontinuierlich, insbesondere in der Abgasleitung, erfassbar ist. Hierdurch ergibt sich der Vorteil einer möglichst genauen Kenntnis der aus der fluidführenden Rohrleitung entnommenen Fluidmasse, wodurch bspw. bei einer späteren Rückführung des Fluids in die Rohrleitung oder durch eine zusätzliche Messung in dem Auffangbehälter kontrolliert werden kann, ob eine Teilmenge des Fluids bspw. durch eine Leckage unkontrolliert in die Umgebung entweichen konnte. Auch ergibt sich im Falle einer Verbrennung des aus der Rohrleitung herausgeleiteten Fluids der Vorteil, dass die im Zuge der Verbrennung entstandenen Emissionen möglichst genau berechnet werden können. Wenigstens ein Sensorelement zur Erfassung einer Masse bzw. eines Massenstroms kann als Coriolis-Massendurchflussmesser oder als Vortex-Massendurchflussmesser oder als thermischer Massendurchflussmesser ausgebildet sein. Das Sensorelement kann derart ausgebildet sein, dass durch das Sensorelement eine integrierte Erfassung der Temperatur, des Druckes und des Volumenstroms des aus der fluidführenden Rohrleitung, insbesondere durch die Abgasleitung, herausgeleiteten Fluidstroms erfassbar ist.

Es ist erfindungsgemäß denkbar, dass wenigstens ein Sensorelement umfasst ist, wobei durch das Sensorelement wenigstens eine Konzentration, vorzugsweise eine Erdgaskonzentration und/oder Methankonzentration, in dem aus der fluidführenden Rohrleitung herausgeleiteten Fluidstrom und/oder in der Abgasleitung, vorzugsweise kontinuierlich bzw. quasi kontinuierlich, insbesondere in der Abgasleitung, erfassbar ist. In anderen Worten kann es vorgesehen sein, dass wenigstens ein Sensorelement umfasst ist, durch welches die Konzentration wenigstens eines Gases, vorzugsweise eines Erdgases und/oder von Methan, in dem durch die Blasensetzvorrichtung bzw. die Abgasleitung aus der fluidführenden Rohrleitung herausgeleiteten Fluidstrom erfassbar ist. Hierdurch kann, insbesondere beim Vorliegen eines Fluidgemisches in der fluidführenden Rohrleitung bzw. dem fluidführenden Rohrleitungsabschnitt, beurteilt werden, ob der Erdgasanteil bzw. Methananteil in dem durch die Blasensetzvorrichtung herausgeleiteten Fluidstrom für eine Entzündung und/oder eine stabile Verbrennung in der Gasfackel ausreichend ist. Das Fluidgemisch kann bspw. wenigstens ein Erdgas und ein Inertgas, vorzugsweise Stickstoff, umfassen. Unterschreitet der Erdgasanteil in dem Fluidgemisch einen Grenzwert, so kann die Gasfackel erlöschen und das in dem der Gasfackel zugeführten Fluidstrom enthaltene Erdgas unverbrannt in die Atmosphäre entweichen.

Im Rahmen der Erfindung ist es optional möglich, dass wenigstens ein Sensorelement umfasst ist, wobei durch das Sensorelement wenigstens eine Positionsinformation zur aktuellen geografischen Position der Blasensetzvorrichtung erfassbar ist. Das Sensorelement kann als ein GNSS-Sensor (Global Navigation Satellite System) ausgebildet sein. Vorzugsweise kann wenigstens ein Sensorelement als ein GPS-Sensor ausgebildet sein. Die Verwendung anderer Satellitensysteme wie GLONASS, GALILEO oder BEIDOU ist ebenfalls durch den Gedanken der Erfindung umfasst. Durch eine auf die Blasensetzvorrichtung bezogene Positionserfassung ergibt sich der Vorteil, dass der Ort, an dem Verbrennungsgase und/oder ggf. Mengen eines unbehandelten bzw. unverbrannten Fluids in die Atmosphäre abgegeben wurden, dokumentiert und für eine nachfolgende Auswertung festgehalten werden kann.

Ferner kann es im Rahmen der Erfindung vorgesehen sein, dass wenigstens ein Sensorelement umfasst ist, wobei durch das Sensorelement wenigstens ein aus der Blasensetzvorrichtung austretender Leckagestrom erfassbar ist. Der Leckagestrom kann ein Leckagestrom des aus der fluidführenden Rohrleitung herausgeleiteten Fluids bzw. Fluidstroms in die Umgebung sein. In anderen Worten kann es vorgesehen sein, dass wenigstens ein Sensorelement vorgesehen ist, mit dem ein aus der Blasensetzvorrichtung, vorzugsweise wenigstens ein aus der Abgasleitung, austretender Leckagestrom des aus der fluidführenden Rohrleitung durch die Blasensetzvorrichtung herausgeleiteten Fluids erfassbar ist. Das in der fluidführenden Rohrleitung enthaltene Fluid kann brennbar bzw. explosiv sein. Ein unkontrollierter Austritt des Fluids in die nähere Umgebung der Blasensetzvorrichtung stellt somit aufgrund einer möglichen versehentlichen Entzündung ein unmittelbares Risiko für anwesende Benutzer und umliegende Infrastrukturen dar. Die Erfassung einer Leckage bietet somit den Vorteil einer erhöhten Arbeitssicherheit. Vorzugsweise kann wenigstens ein Sensorelement zur, insbesondere kontinuierlichen oder quasikontinuierlichen, Erfassung einer Fluidkonzentration bzw. Gaskonzentration, vorzugsweise einer Erdgaskonzentration und/oder Methankonzentration, in der Umgebungsluft ausgebildet sein. Ferner kann es vorgesehen sein, dass wenigstens ein Sensorelement in unmittelbarer Nähe wenigstens einer Dichtung und/oder Absperrvorrichtung der Blasensetzvorrichtung angeordnet ist, wobei die Dichtung und/oder die Absperrvorrichtung dazu ausgebildet ist, die Blasensetzvorrichtung zumindest abschnittsweise derart abzudichten, dass der aus der fluidführenden Rohrleitung durch die Blasensetzvorrichtung herausgeleitete Fluidstrom nicht aus der Blasensetzvorrichtung in die Umgebung entweicht. In anderen Worten kann es vorgesehen sein, dass wenigstens ein Sensorelement zur Erfassung eines Leckagestroms in unmittelbarer Nähe einer potentiellen Leckageposition angeordnet ist. Eine potentielle Leckageposition kann insbesondere eine Verbindungsstelle zwischen zwei fluidführenden Bauteilen sein.

In Bezug auf die vorliegende Erfindung ist es ferner vorstellbar, dass wenigstens ein Sensorelement umfasst ist, wobei durch das Sensorelement wenigstens ein Umgebungsdruck und/oder eine Umgebungstemperatur an der Blasensetzvorrichtung erfassbar ist.

Auch kann es vorgesehen sein, dass wenigstens ein Sensorelement eine Kommunikationsschnittstelle umfasst, wobei über die Kommunikationsschnittstelle wenigstens ein Sensordatensatz an einen Empfänger, insbesondere wenigstens an eine Kommunikationseinheit und/oder Steuereinheit der Blasensetzvorrichtung, übertragbar ist. Ein Sensordatensatz kann wenigstens einen durch das Sensorelement erfassten Messwert, insbesondere ein Volumen bzw. einen Volumenstrom und/oder eine Masse bzw. einen Massenstrom und/oder eine Durchflussgeschwindigkeit und/oder eine Temperatur und/oder einen Druck und/oder eine Konzentration umfassen. Ferner kann ein Sensordatensatz wenigstens einen, insbesondere einem Messparameter zugeordneten, Zeitstempel umfassen. Über den Zeitstempel kann ein durch das Sensorelement erfasster Wert einem konkreten Zeitpunkt der Erfassung zugeordnet werden. Der Zeitstempel kann dem Sensordatensatz durch das Sensorelement zugeordnet werden. Auch ist es jedoch denkbar, dass der Zeitstempel dem Sensordatensatz nachträglich, insbesondere von einer Steuereinheit, zugeordnet wird.

Wenigstens ein Sensorelement, insbesondere zur Erfassung eines Volumenstroms und/oder einer Fließgeschwindigkeit bzw. eines Durchflusses und/oder eines Massenstroms und/oder eines Drucks und/oder einer Temperatur und/oder einer Konzentration, kann derart ausgebildet sein, dass eine Erfassung wiederkehrend bzw. zeitaufgelöst, insbesondere in festen Zeitabständen, durchführbar ist. Die Erfassung kann mit einer Frequenz von wenigstens 10 Hz, insbesondere wenigstens 50 Hz, vorzugsweise wenigstens 100 Hz, besonders bevorzugt wenigstens 500 Hz oder wenigstens 1000 Hz erfolgen. Durch eine Reduktion der Zeitabstände bzw. Erhöhung der Erfassungsfrequenz kann insbesondere die Genauigkeit von kumulierten und/oder gemittelten Sensorwerten bzw. Sensordatensätzen, wie bspw. einem in der Abgasleitung durchgesetzten Gesamtvolumen eines Fluids oder einer währenddessen ermittelten mittleren Temperatur des Fluids, erhöht und die Aussagekraft der Sensordaten somit gesteigert werden.

Wenigstens ein Sensorelement kann zu einer integrierten Erfassung mehrerer Messgrößen ausgebildet sein. In anderen Worten kann ein Sensorelement wenigstens zwei Sensoren, vorzugsweise eine Vielzahl von Sensoren, umfassen, wobei durch jeden der Sensoren eine Erfassung wenigstens einer Messgröße durchführbar ist. So kann insbesondere wenigstens ein Sensorelement für eine integrierte Erfassung eines Volumens bzw. Volumenstroms und/oder einer Durchflussgeschwindigkeit und/oder eines Drucks und/oder einer Temperatur und/oder einer Dichte und/oder einer Konzentration, insbesondere in dem aus der fluidführenden Rohrleitung herausgeleiteten Fluidstrom und/oder einer Abgasleitung der Blasensetzvorrichtung, ausgebildet sein. Wenigstens ein Sensorelement kann in eine Steuereinheit der Blasensetzvorrichtung integriert sein.

Es kann ferner vorgesehen sein, dass wenigstens eine Steuereinheit, insbesondere zur zumindest teilweise automatisierten Steuerung der Blasensetzvorrichtung, umfasst ist. Es kann vorgesehen sein, dass die Steuereinheit zumindest temporär in Signalverbindung und/oder Kommunikationsverbindung mit wenigstens einer Kommunikationseinheit und/oder Auswerteeinheit und/oder Alarmeinheit und/oder Mischungsvorrichtung und/oder Fluidfördervorrichtung und/oder Absperrvorrichtung und/oder wenigstens einem Sensorelement und/oder wenigstens einer Druckminderungsvorrichtung der Blasensetzvorrichtung bringbar ist bzw. dass wenigstens eine Kommunikationseinheit und/oder wenigstens eine Auswerteeinheit und/oder wenigstens eine Alarmeinheit und/oder wenigstens eine Mischungsvorrichtung und/oder wenigstens eine Fluidfördervorrichtung und/oder wenigstens eine Absperrvorrichtung und/oder wenigstens ein Sensorelement der Blasensetzvorrichtung durch die Steuereinheit zumindest teilweise steuerbar ist. In anderen Worten kann es vorgesehen ein, dass die Steuereinheit mit wenigstens einem Sensorelement der Blasensetzvorrichtung zumindest temporär in eine Kommunikationsverbindung bringbar ist, sodass wenigstens ein durch das Sensorelement erfasster Sensordatensatz bzw. Messwert in der Steuereinheit empfangbar ist. Auf Grundlage des empfangenen Sensordatensatzes bzw. Messwertes kann, vorzugsweise zumindest teilweise automatisiert, eine Gefahrensituation und/oder Fehlfunktion der Blasensetzvorrichtung erkannt werden bzw. erkennbar sein und/oder der Betrieb der Blasensetzvorrichtung angepasst werden bzw. anpassbar sein. So ist es bspw. denkbar, dass bei der Erfassung einer erhöhten Erdgaskonzentration und/oder Methankonzentration in unmittelbarer Nähe der Blasensetzvorrichtung eine Alarmeinheit der Blasensetzvorrichtung aktivierbar ist bzw. aktiviert wird, um in der Nähe befindliche Benutzer der Blasensetzvorrichtung zu warnen. Auch kann es vorgesehen sein, dass auf Grundlage einer in dem aus der fluidführenden Rohrleitung durch die Blasensetzvorrichtung herausgeleiteten Fluidstrom erfassten Erdgaskonzentration und/oder Methankonzentration der Betrieb einer Mischungsvorrichtung zur Herstellung eines optimalen Brennstoff-Luft-Verhältnisses für eine stöchiometrische Verbrennung in einer Gasfackel, insbesondere durch Anpassen der Menge eines zugeführten Sauerstoffs oder sauerstoffhaltigen Fluidgemisches, zumindest teilweise anpassbar ist. Auch kann durch die Steuereinheit wenigstens eine Absperrvorrichtung derart gesteuert werden, dass ein Fluidstrom, insbesondere in einer Abgasleitung, wenigstens abschnittsweise unterbindbar ist bzw. unterbunden wird und/oder freigebbar ist bzw. freigegeben wird.

Es kann vorgesehen sein, dass wenigstens eine Steuereinheit und/oder wenigstens eine Kommunikationseinheit und/oder wenigstens ein Sensorelement und/oder wenigstens eine Auswerteeinheit und/oder wenigstens eine Fluidfördervorrichtung und/oder wenigstens eine Mischungsvorrichtung einen Anschluss, insbesondere einen Netzanschluss, zur Herstellung einer Energieversorgung umfasst. Insbesondere kann es auch vorgesehen sein, dass die Energieversorgung wenigstens eines Sensorelements und/oder wenigstens einer Kommunikationseinheit und/oder wenigstens einer Auswerteeinheit durch eine Verbindung zu wenigstens einer Steuereinheit herstellbar ist.

Im Rahmen der Erfindung kann es von Vorteil sein, dass wenigstens eine Kommunikationseinheit umfasst ist, wobei die Kommunikationseinheit wenigstens eine Kommunikationsschnittstelle zur drahtlosen oder drahtgebundenen Kommunikation, insbesondere zur Kommunikation mit wenigstens einem mobilen Gerät und/oder wenigstens einem zentralen Server und/oder wenigstens einem Sensorelement der Blasensetzvorrichtung, aufweist. In anderen Worten kann es vorgesehen sein, dass die Kommunikationseinheit mit wenigstens einem Sensorelement und/oder wenigstens einer Auswerteeinheit und/oder wenigstens einer Alarmeinheit und/oder wenigstens einer Fluidfördervorrichtung und/oder wenigstens einer Mischungsvorrichtung und/oder wenigstens einer Anzeigeeinheit und/oder wenigstens einer Steuereinheit der Blasensetzvorrichtung und/oder mit wenigstens einem mobilen Gerät und/oder mit wenigstens einem zentralen Server zumindest temporär, insbesondere über wenigstens eine Kommunikationsschnittstelle, in Kommunikationsverbindung bringbar ist. Durch eine Kommunikationseinheit ergibt sich wenigstens der Vorteil, dass über wenigstens ein Sensorelement der Blasensetzvorrichtung erfasste Sensordaten bzw. ein Datensatz über die Kommunikationseinheit zur weiteren Verwendung bzw. Auswertung und/oder Speicherung an ein mobiles Gerät und/oder einen zentralen Server versendet bzw. übermittelt werden können. Auch detektierte Fehlfunktionen und/oder detektierte Gefährdungssituationen können entsprechend dokumentiert werden.

Die Übertragung wenigstens eines Sensordatensatzes oder anderweitiger Informationen von der Kommunikationseinheit an ein mobiles Gerät und/oder einen zentralen Server kann zumindest teilweise kabellos und/oder kabelgebunden erfolgen. Die Übertragung kann zumindest teilweise über ein Netzwerk, insbesondere ein lokales Netzwerk oder ein globales Netzwerk, vorzugsweise das Internet, durchführbar sein. Wenigstens eine Kommunikationsschnittstelle kann zur drahtlosen Kommunikation ausgebildet sein, insbesondere als Bluetooth-Schnittstelle, Wi-Fi-Schnittstelle oder Mobilfunkschnittstelle. Auch kann wenigstens eine Kommunikationsschnittstelle zur drahtgebundenen Kommunikation ausgebildet sein, insbesondere als USB-Schnittstelle oder Ethernet-Schnittstelle. Wenigstens eine Kommunikationseinheit kann in eine Steuereinheit der Blasensetzvorrichtung integriert sein.

Auch kann es im Rahmen der Erfindung vorgesehen sein, dass wenigstens ein, vorzugsweise flüchtiger oder nichtflüchtiger, Datenspeicher umfasst ist. In anderen Worten ist es denkbar, dass die Blasensetzvorrichtung, insbesondere wenigstens eine Steuereinheit und/oder wenigstens eine Kommunikationseinheit, wenigstens einen, insbesondere flüchtigen oder nichtflüchtigen, Datenspeicher umfasst. Hierdurch ergibt sich der Vorteil, dass durch Sensorelemente erfasste Sensordatensätze bzw. Messwerte in der Blasensetzvorrichtung, insbesondere in der Steuereinheit und/oder Kommunikationseinheit, zumindest temporär gespeichert werden können und im Falle einer abbrechenden Energieversorgung oder fehlenden Kommunikationsverbindung nicht verloren gehen. Insbesondere wenn durch die Kommunikationseinheit keine Kommunikationsverbindung aufbaubar ist, muss gewährleistet werden, dass die erfassten Daten wenigstens so lange gespeichert werden können, bis diese über eine Kommunikationsverbindung durch die Kommunikationseinheit an ein mobiles Gerät und/oder einen zentralen Server versendet werden können.

Im Rahmen der Erfindung ist es denkbar, dass wenigstens eine Auswerteeinheit zur Auswertung wenigstens eines Sensordatensatzes und/oder wenigstens eines durch ein Sensorelement erfassten Messwertes umfasst ist. In anderen Worten kann es vorgesehen sein, dass die Blasensetzvorrichtung wenigstens eine Auswerteeinheit umfasst, wobei wenigstens ein Sensordatensatz bzw. wenigstens ein durch wenigstens ein Sensorelement erfasster Messparameter durch die Auswerteeinheit auswertbar ist. Es kann vorgesehen sein, dass wenigstens eine Auswerteeinheit in eine Kommunikationseinheit und/oder eine Steuereinheit der Blasensetzvorrichtung integriert ist. Hierdurch ergibt sich der Vorteil einer besonders bauraumsparenden Anordnung.

Eine Auswertung kann den Vergleich wenigstens eines durch wenigstens ein Sensorelement erfassten Messparameters mit wenigstens einem Grenzwert umfassen. So kann ein Vergleich erfolgen, ob durch den Messparameter ein, insbesondere vorab, definierter Grenzwert überschritten wurde und/oder ob durch den Messparameter ein, insbesondere vorab definierter, Grenzwert unterschritten wurde. Auch kann die Auswertung wenigstens den Vergleich wenigstens zweier durch verschiedene Sensorelemente erfasster Messwerte umfassen, wobei wenigstens eine ausreichende Übereinstimmung der Sensorwerte erfassbar ist. Auch kann die Auswertung wenigstens die Berechnung wenigstens eines Mittelwerts umfassen; insbesondere kann die Mittelung eine zeitliche Mittelung, vorzugsweise also die Mittelung von durch die Sensoreinheit erfassten Messwerten über einen den Messungen zugrundeliegenden Zeitraum sein. Auch kann die Auswertung wenigstens die Berechnung wenigstens eines kumulierten Messwertes umfassen; insbesondere kann der kumulierte Messwert wenigstens zwei zeitlich nacheinander durch die Sensoreinheit erfasste Messwerte beinhalten. Insbesondere kann es vorgesehen sein, dass ein über einen Zeitraum, insbesondere in einer Abgasleitung, durch wenigstens ein Sensorelement erfasster Volumenstrom und/oder Massenstrom zu einem Gesamtvolumen und/oder einer Gesamtmasse kumuliert wird und/oder ein über einen Zeitraum, insbesondere in einer Abgasleitung, erfasster Druck und/oder eine Temperatur zu einem mittleren Druck bzw. einer mittleren Temperatur gemittelt wird. Durch eine Auswerteeinheit ergibt sich der Vorteil, dass auf Grundlage von erfassten Messwerten bzw. durch die Auswerteeinheit generierten bzw. generierbaren Auswerteergebnissen Entscheidungen über den Betrieb und/oder die Betriebssicherheit der Blasensetzvorrichtung, zumindest teilweise, automatisiert getroffen werden können bzw. der Betrieb der Blasensetzvorrichtung zumindest teilweise angepasst werden kann.

So ist es bspw. denkbar, dass, wenn eine Erdgaskonzentration und/oder Methankonzentration in unmittelbarer Umgebung der Blasensetzvorrichtung einen Grenzwert überschreitet, ein Alarm, insbesondere durch eine Steuereinheit, auslösbar ist bzw. ausgelöst wird. Dies kann bspw. durch die Aktivierung wenigstens einer Alarmfunktion einer Alarmeinheit erfolgen. Auch ist es denkbar, dass, wenn eine Erdgaskonzentration und/oder Methankonzentration in unmittelbarer Umgebung der Blasensetzvorrichtung einen Grenzwert überschreitet, ein Fluidstrom durch wenigstens eine Abgasleitung in wenigstens einem Abschnitt der Abgasleitung unterbunden wird. Dies kann bspw. durch eine Ansteuerung bzw. ein Bewegen wenigstens einer Absperrvorrichtung von einer Offenposition in eine Absperrposition durchgeführt werden, wobei vorzugsweise in der Offenposition die Absperrvorrichtung von einem Fluidstrom passierbar bzw. ein Fluidstrom durch die Absperrvorrichtung freigebbar ist und in der Absperrposition ein Fluidstrom durch die Absperrvorrichtung unterbunden wird bzw. unterbindbar ist.

Auch ist es denkbar, dass, wenn eine Erdgaskonzentration und/oder Methankonzentration in dem durch die Blasensetzvorrichtung aus der fluidführenden Rohrleitung herausgeleiteten Fluidstrom einen Grenzwert unterschreitet, ein Zuleiten des Fluidstroms zu einer Gasfackel, insbesondere durch eine Steuereinheit, unterbrechbar ist bzw. unterbrochen wird, da eine Verbrennung des Fluidstroms in der Gasfackel nicht mehr gewährleistet werden kann. Dies kann bspw. durch eine Ansteuerung bzw. ein Bewegen wenigstens einer Absperrvorrichtung von einer Offenposition in eine Absperrposition durchgeführt werden, wobei vorzugsweise in der Offenposition die Absperrvorrichtung von einem Fluidstrom passierbar bzw. ein Fluidstrom durch die Absperrvorrichtung freigebbar ist und in der Absperrposition ein Fluidstrom durch die Absperrvorrichtung unterbunden wird bzw. unterbindbar ist. Auch kann es vorgesehen sein, dass, wenn eine Erdgaskonzentration und/oder Methankonzentration in dem durch die Blasensetzvorrichtung aus der fluidführenden Rohrleitung herausgeleiteten Fluidstrom einen Grenzwert unterschreitet, der aus der fluidführenden Rohrleitung herausgeleitete Fluidstrom anstatt zu einer Gasfackel in einen Auffangbehälter leitbar ist bzw. geleitet wird. Dies kann bspw. durch die Ansteuerung wenigstens zweier Absperrvorrichtungen erfolgen, wobei eine Absperrvorrichtung von einer Offenposition in eine Absperrposition bewegt wird und somit ein Fluidstrom zu der Gasfackel unterbunden wird bzw. unterbindbar ist und eine Absperrvorrichtung von einer Absperrposition in eine Offenposition bewegt wird und somit ein Fluidstrom in den Auffangbehälter freigegeben wird bzw. freigebbar ist.

Auch kann vorgesehen sein, dass in Abhängigkeit einer in dem aus der fluidführenden Rohrleitung herausgeleiteten Fluidstrom erfassten Erdgaskonzentration und/oder Methankonzentration der Betrieb einer Mischungsvorrichtung zumindest teilweise angepasst wird bzw. anpassbar ist. So kann es vorgesehen sein, dass in Abhängigkeit der o. g. Konzentration die Zufuhrmenge wenigstens eines weiteren Fluids, insbesondere Sauerstoff oder eines sauerstoffhaltigen Fluidgemischs, zumindest temporär derart geregelt wird, dass in der Gasfackel eine stöchiometrische oder überstöchiometrische (Sauerstoffüberschuss) Verbrennung erfolgt bzw. durchführbar ist.

Es kann ferner vorgesehen sein, dass wenigstens eine Auswerteeinheit zumindest temporär in Signalverbindung bzw. Kommunikationsverbindung mit wenigstens einer Steuereinheit bringbar ist, wobei wenigstens ein Sensordatensatz bzw. ein durch ein Sensorelement erfasster Messwert durch die Steuereinheit an die Auswerteeinheit kommunizierbar ist und ein durch die Auswerteeinheit ermitteltes Auswerteergebnis von der Auswerteeinheit an die Steuereinheit übermittelbar ist bzw. durch die Steuereinheit empfangbar ist. So kann eine zumindest teilweise automatisierte Auswertung von Sensordaten durchgeführt und anschließend eine zumindest teilweise Steuerung des Betriebes der Blasensetzvorrichtung durch die Steuereinheit auf Grundlage des Auswerteergebnisses vorgenommen werden.

Es kann im Rahmen der Erfindung vorgesehen sein, dass wenigstens eine Alarmeinheit zur zumindest temporären Aussendung akustischer und/oder optischer Warnsignale umfasst ist. In anderen Worten kann es vorgesehen sein, dass die Blasensetzvorrichtung wenigstens eine Alarmeinheit umfasst, wobei durch die Alarmeinheit akustische und/oder optische Warnsignale aussendbar sind bzw. ausgesendet werden können. Es kann vorgesehen sein, dass wenigstens eine Alarmeinheit zumindest temporär in Signalverbindung bzw. Kommunikationsverbindung mit wenigstens einer Steuereinheit bringbar ist, wobei durch die Steuereinheit eine Aussendung von akustischen und/oder optischen Warnsignalen durch die Alarmeinheit aktivierbar und/oder deaktivierbar ist. So kann bei der Erkennung eines Fehlbetriebes und/oder einer Gefahrensituation eine Aussendung von Alarmsignalen aktiviert und bei einer Rückkehr zu einem ordnungsgemäßen und/oder sicheren Betrieb der Blasensetzvorrichtung die Aussendung von Warnsignalen wieder deaktiviert werden. Es kann vorgesehen sein, dass wenigstens eine Alarmeinheit wenigstens ein Leuchtmittel zur Aussendung optischer Warnsignale umfasst. Das Leuchtmittel kann als eine, insbesondere rote oder grüne, LED ausgebildet sein. Insbesondere durch die Verwendung von verständlichen Signalfarben, wie rot für einen fehlerhaften Betrieb bzw. eine Gefahrensituation und grün für einen sicheren bzw. fehlerfreien Betrieb, kann ein Benutzer der Blasensetzvorrichtung zuverlässig und unmissverständlich über den jeweiligen Status informiert werden. Ferner ist es denkbar, dass wenigstens eine Alarmeinheit wenigstens eine Lautsprechereinheit zur Aussendung akustischer Warnsignale umfasst. Insbesondere eine kombinierte Aussendung von akustischen und optischen Warnsignalen hat sich als besonders zuverlässig in Bezug auf eine unmissverständliche Warnung von in der Nähe der Blasensetzvorrichtung befindlichen und möglicherweis gefährdeten Benutzern bzw. Personen erwiesen. Wenigstens eine Alarmeinheit kann in eine Steuereinheit der Blasensetzvorrichtung integriert sein.

Es kann ferner vorgesehen sein, dass wenigstens eine Anzeigeeinheit zur Anzeige wenigstens einer Sensorinformation bzw. wenigstens eines durch wenigstens ein Sensorelement erfassten Messwertes umfasst ist. Bei der Sensorinformation kann es sich um einen zeitlichen Verlauf wenigstens eines durch ein Sensorelement erfassten Messwertes handeln. Auch kann es sich bei der Sensorinformation um einen, insbesondere über einen Messzeitraum, kumulierten Wert und/oder um einen Momentanwert handeln. Hierdurch ergibt sich der Vorteil, dass die durch wenigstens ein Sensorelement erfassten Messwerte für einen Benutzer der Blasensetzvorrichtung darstellbar sind und eine Überwachung des Betriebs der Blasensetzvorrichtung durch den Benutzer somit vereinfacht bzw. ermöglicht wird. Wenigstens eine Anzeigeeinheit kann ein Display, vorzugsweise ein LED Display umfassen. Wenigstens eine Anzeigeeinheit kann in eine Steuereinheit der Blasensetzvorrichtung integriert sein.

Es ist im Rahmen der Erfindung denkbar, dass wenigstens eine Mischungsvorrichtung zur Mischung des aus der fluidführenden Rohrleitung herausgeleiteten Fluidstroms mit wenigstens einem weiteren in die Mischungsvorrichtung eingebrachten Fluid umfasst ist. Das wenigstens eine in die Mischungsvorrichtung eingebrachte Fluid kann vorzugsweise Sauerstoff und/oder ein sauerstoffhaltiges Fluid- bzw. Gasgemisch, insbesondere Luft bzw. Umgebungsluft, sein. Wird der aus der fluidführenden Rohrleitung durch die Blasensetzvorrichtung herausgeleitete Fluidstrom einer Gasfackel zum Abbrennen des Fluidstroms zugeführt, so kann in der Mischungsvorrichtung der Fluidstrom vorab mit Sauerstoff und/oder einem sauerstoffhaltigen Fluidgemisch gemischt werden. Bevorzugt kann das Mischungsverhältnis derart gewählt sein, dass in Bezug auf die nachfolgende Verbrennung in der Gasfackel wenigstens ein stöchiometrisches Verbrennungsluftverhältnis vorliegt bzw. in der Gasfackel eine stöchiometrische Verbrennung des Fluidstroms, insbesondere des Erdgasstroms, durchführbar ist. Auch die Herstellung eines überstöchiometrischen Verbrennungsluftverhältnisses (Verbrennung bei Luft bzw. Sauerstoffüberschuss bzw. magere Verbrennung) ist denkbar. Hierdurch ergibt sich der Vorteil, dass ein vollständiger Abbrand des aus der fluidführenden Rohrleitung in die Gasfackel geleiteten Fluidstroms gewährleistet wird und das betreffende Fluid nicht unverbrannt bzw. unbehandelt in die Atmosphäre gelangt, wie dies bei einer unterstöchiometrischen (fetten) Verbrennung der Fall wäre.

Die Mischungsvorrichtung kann einen Mischungsraum zur, vorzugsweise homogenen, Mischung wenigstens zweier Fluidströme umfassen. Der Mischungsraum kann wenigstens ein statisches oder aktives Mischungselement zur Durchmischung der in dem Mischungsraum befindlichen Fluide bzw. Fluidströme umfassen. Ferner kann die Mischungsvorrichtung wenigstens einen Fluidanschluss bzw. vorzugsweise wenigstens zwei oder wenigstens drei Fluidanschlüsse umfassen. Es ist denkbar, dass über einen Fluidanschluss wenigstens ein Fluidstrom in den Mischungsraum der Mischungsvorrichtung einleitbar ist bzw. dass wenigstens ein Fluidanschluss mit dem Mischungsraum der Mischungsvorrichtung in Fluidkommunikation steht. So kann bspw. über einen ersten Fluidanschluss das durch die Blasensetzvorrichtung aus der fluidführenden Rohrleitung herausgeleitete Fluid in den Mischungsraum eingebracht werden bzw. einbringbar sein und über einen zweiten Fluidanschluss wenigstens ein weiteres Fluid, insbesondere Sauerstoff oder ein sauerstoffhaltiges Fluidgemisch, in den Mischungsraum eingebracht werden bzw. einbringbar sein und über einen dritten Fluidanschluss das in dem Mischungsraum hergestellte Fluidgemisch zur Verbrennung in die Gasfackel überführt werden bzw. überführbar sein. Die Einbringung des wenigstens einen weiteren Fluids, insbesondere des Sauerstoffs oder sauerstoffhaltigen Fluidgemisches, in den Mischungsraum kann zumindest temporär unter Verwendung wenigstens einer Pumpe bzw. eines Kompressors und/oder eines Gebläses erfolgen bzw. durchführbar sein.

Auch ist es denkbar, dass wenigstens eine Fluidfördervorrichtung zur zumindest teilweisen und/oder teilweisen Evakuierung der fluidführenden Rohrleitung bzw. zur zumindest teilweisen Evakuierung des fluidführenden Rohrleitungsabschnittes und/oder zur zumindest teilweisen Evakuierung des Auffangbehälters umfasst ist. In anderen Worten kann es vorgesehen sein, dass die Blasensetzvorrichtung wenigstens eine Fluidfördervorrichtung umfasst, wobei durch die Fluidfördervorrichtung die fluidführende Leitung und/oder wenigstens eine Auffangbehälter zumindest abschnittsweise evakuierbar ist bzw. ein Unterdruck in zumindest einem Abschnitt einer Abgasleitung der Blasensetzvorrichtung erzeugbar ist. Wird das in der fluidführenden Rohrleitung bzw. dem betreffenden Rohrleitungsabschnitt enthaltene Fluid in einen Auffangbehälter bzw. zu einer Gasfackel geleitet, so kann hierzu zunächst ein Druckunterschied zwischen dem Auffangbehälter und der fluidführenden Rohrleitung bzw. der Umgebung und der fluidführenden Rohrleitung genutzt werden, da die Rohrleitung üblicherweise mit einem im Vergleich zur Umgebung deutlich höheren Druck beaufschlagt ist. Es reicht somit, eine Fluidkommunikation zwischen dem Auffangbehälter bzw. der Gasfackel und der fluidführenden Rohrleitung herzustellen, damit das Fluid durch die Blasensetzvorrichtung, vorzugsweise durch die Abgasleitung, in den Auffangbehälter strömt. Mit sinkendem Druck in der Leitung bzw. zunehmendem Druckausgleich zwischen Rohrleitung und Auffangbehälter bzw. Rohrleitung und Umgebung verlangsamt sich diese Strömung jedoch bzw. kommt zum Stillstand. Ein weiterer Fluidtransfer in den Auffangbehälter bzw. zu der Gasfackel ist somit nicht mehr möglich. Durch zusätzliche Verwendung wenigstens einer Fluidfördervorrichtung kann der Fluidstrom aus der fluidführenden Rohrleitung bzw. dem betreffenden Rohrleitungsabschnitt in den Auffangbehälter bzw. zu der Gasfackel zuverlässig aufrechterhalten werden. So kann eine vollständige oder im Wesentlichen vollständige Entleerung der fluidführenden Rohrleitung bzw. des betreffenden Rohrleitungsabschnittes zuverlässig sichergestellt werden. Auch kann wenigstens eine Fluidfördervorrichtung dazu genutzt werden, das in dem Auffangbehälter aufgefangene Fluid nach Abschluss der Arbeiten an der fluidführenden Rohrleitung, vorzugsweise durch die Abgasleitung, wieder in die fluidführende Rohrleitung zurückzuführen. Hierdurch ergibt sich der Vorteil, dass eine weitere Entsorgung bzw. Verwendung des aufgefangenen Fluids nicht notwendig ist und das Fluid seiner ursprünglichen Verwendung wieder zugeführt werden kann. Wenigstens eine Fluidfördervorrichtung kann wenigstens einen Kompressor bzw. wenigstens ein Gebläse umfassen.

Wenigstens eine Fluidfördervorrichtung kann zumindest dazu ausgebildet sein, einen Fluidstrom aus der fluidführenden Rohrleitung, insbesondere durch die Abgasleitung, in wenigstens einen Auffangbehälter und/oder zu wenigstens einer Gasfackel zu fördern. Auch kann wenigstens eine Fluidfördervorrichtung zumindest dazu ausgebildet sein, einen Fluidstrom aus wenigstens einem Auffangbehälter, vorzugsweise durch die Abgasleitung, in die fluidführende Rohrleitung zu fördern. Insbesondere bei der Förderung des Fluidstroms in den Auffangbehälter kann es vorgesehen sein, dass der Fluidstrom zumindest teilweise durch die Fluidfördervorrichtung komprimiert wird. Auch kann die Arbeitsrichtung wenigstens einer Fluidfördervorrichtung umkehrbar sein, sodass durch die Fluidfördervorrichtung sowohl ein Fluidstrom aus der fluidführenden Rohrleitung, insbesondere durch die Abgasleitung, in wenigstens einen Auffangbehälter und/oder zu wenigstens einer Gasfackel förderbar ist als auch ein Fluidstrom aus wenigstens einem Auffangbehälter, vorzugsweise durch die Abgasleitung, in die fluidführende Rohrleitung förderbar ist. Wenigstens eine Fluidfördervorrichtung kann als eine Vakuumpumpe ausgebildet sein.

Im Rahmen der Erfindung ist es optional möglich, dass wenigstens ein Sicherungselement zur zumindest temporären Fixierung der Blasensetzvorrichtung an der fluidführenden Rohrleitung umfasst ist. In anderen Worten kann es vorgesehen sein, dass die Blasensetzvorrichtung wenigstens ein Sicherungselement umfasst, wobei das Sicherungselement mit der fluidführenden Rohrleitung zumindest abschnittsweise formschlüssig und/oder kraftschlüssig und/oder reversibel verbindbar ist, um die Blasensetzvorrichtung, vorzugsweise positionsfest, an der fluidführenden Rohrleitung zu fixieren. Hierdurch ergibt sich der Vorteil, dass eine ungewollte Fehlpositionierung der Blasensetzvorrichtung im Betrieb, bspw. durch einen ungewollten Kontakt mit einem Benutzer, effektiv vermieden werden kann. Es kann vorgesehen sein, dass eine formschlüssige und/oder kraftschlüssige Verbindung zwischen dem Sicherungselement und der fluidführenden Rohrleitung und/oder einem Abschnitt der Blasensetzvorrichtung wenigstens teilweise über eine Rohrschelle herstellbar ist. Es kann vorgesehen sein, dass das Sicherungselement, insbesondere an wenigstens einem Ende, wenigstens eine Rohrschelle aufweist. Ferner kann das Sicherungselement zumindest abschnittsweise als ein starres Stabelement ausgebildet sein.

Es kann ferner vorgesehen sein, dass wenigstens ein Auffangbehälter wenigstens ein Sensorelement zur Erfassung eines Drucks und/oder einer Temperatur im Innenraum des Auffangbehälters umfasst. Durch eine Erfassung von Druck und/oder Temperatur kann, insbesondere unter Verwendung der idealen Gasgleichung in Verbindung mit dem bekannten Innenvolumen des Auffangbehälters, eine in dem Auffangbehälter aufgefangene Fluidmasse zumindest näherungsweise ermittelt werden. Dieser Wert kann, vorzugsweise kontinuierlich oder quasi kontinuierlich, mit einem in der Abgasleitung detektierten Massendurchsatz bzw. der entsprechenden kumulierten Gesamtmasse, vorzugsweise in einer Auswerteeinheit, abgeglichen werden. Hierdurch kann eine Leckage bzw. ein ungewollter Austritt des aus der fluidführenden Rohrleitung herausgeleiteten Fluidstroms in die Umgebung in dem Bereich zwischen dem Auffangbehälter und der Erfassungsposition in der Abgasleitung zuverlässig detektiert werden. Hieraus ergibt sich der Vorteil einer erhöhten Betriebssicherheit. Auch kann hierdurch der aktuelle Füllstand des Auffangbehälters ermittelt bzw. überwacht werden und ein Wechsel des Auffangbehälters initiiert werden, sobald ein maximaler Füllstand bzw. eine maximale Füllmenge und/oder ein maximaler Innendruck und/oder eine maximale Innentemperatur detektiert wurde. Hierdurch kann eine Beschädigung des Auffangbehälters effektiv vermieden werden.

Auch kann es vorgesehen sein, dass wenigstens ein Auffangbehälter ein Innenraumvolumen bzw. Auffangvolumen von wenigstens 1 m³, vorzugsweise von wenigstens 10 m³, besonders bevorzugt von wenigstens 50 m³ aufweist. Auch oder alternativ kann wenigstens ein Auffangbehälter abschnittsweise aus einem flexiblen und/oder faltbaren Material ausgebildet sein. In anderen Worten kann es vorgesehen sein, dass der Auffangbehälter in ungefülltem Zustand wenigstens einmal, vorzugsweise mehrmals gefaltet werden kann bzw. faltbar ist. Hierdurch kann das Volumen des Auffangbehälters in ungefülltem Zustand stark gegenüber dem Volumen in gefülltem Zustand reduziert werden, was den Transport des Auffangbehälters in ungefülltem Zustand insbesondere bei einem großen Auffangvolumen bzw. Innenraumvolumen des Auffangbehälters deutlich vereinfacht.

Ferner ist es denkbar, dass wenigstens eine Abgasleitung zumindest abschnittsweise flexibel bzw. als ein Gasschlauch ausgebildet ist. Der Gasschlauch kann zumindest abschnittsweise bzw. zumindest teilweise aus einem Gummi und/oder Kunststoff ausgebildet sein. Auch kann der Mantel des Gasschlauchs wenigstens eine Textileinlage bzw. Textilschicht umfassen. Durch die Verwendung eines Gasschlauchs ergibt sich der Vorteil, dass die Positionierung einer Gasfackel und/oder eines Auffangbehälters relativ zur Blasensetzvorrichtung aufgrund der Flexibilität des Gasschlauchs einfach und flexibel veränderbar ist. So kann je nach Verwendungsort der Blasensetzvorrichtung bspw. auf spezifische Geländeeigenschaften reagiert und ein sicherer Stand des Auffangbehälters bzw. der Gasfackel ermöglicht werden.

Auch ist es im Rahmen der Erfindung denkbar, dass wenigstens eine Fluidfördervorrichtung und/oder wenigstens ein Auffangbehälter und/oder wenigstens eine Gasfackel und/oder wenigstens eine Mischungsvorrichtung reversibel mit wenigstens einer Abgasleitung bzw. wenigstens einem Abschnitt der Abgasleitung der Blasensetzvorrichtung verbindbar ist. Die Verbindung kann zumindest teilweise als eine, insbesondere dichte bzw. gasdichte, Schraubverbindung ausgebildet sein. Hierdurch ergibt sich der Vorteil, dass die Blasensetzvorrichtung zum Zwecke des Transports zumindest teilweise zerlegbar ist und insbesondere wenigstens eine Gasfackel und/oder wenigstens ein Auffangbehälter und/oder wenigstens eine Fluidfördervorrichtung und/oder wenigstens eine Mischungsvorrichtung einfach und flexibel ausgetauscht und/oder gewartet werden können. In Bezug auf einen Auffangbehälter ist es ferner denkbar, dass dieser von der Blasensetzvorrichtung getrennt wird, sobald er vollständig befüllt ist und durch einen leeren Auffangbehälter ersetzt wird.

Ferner kann es im Rahmen der Erfindung vorgesehen sein, dass wenigstens eine Gasfackel eine Ständervorrichtung umfasst, wobei durch die Ständervorrichtung ein sicherer Stand der Gasfackel auf einem Untergrund herstellbar ist. Die Ständervorrichtung kann vorzugsweise als Dreibein ausgebildet sein.

Die obenstehende Aufgabe wird ferner gelöst durch ein erfindungsgemäßes System zum zumindest temporären Sperren und/oder zumindest abschnittsweisen Entleeren wenigstens einer fluidführenden Rohrleitung, insbesondere eines fluidführenden Rohrleitungsabschnittes, umfassend wenigstens zwei Blasensetzvorrichtungen, wobei wenigstens eine Blasensetzvorrichtung eine erfindungsgemäße Blasensetzvorrichtung ist bzw. nach einem der Ansprüche 1 - 10 ausgebildet ist. In Bezug auf das erfindungsgemäße System ergeben sich die gleichen Vorteile, wie sie in Bezug auf die erfindungsgemäße Blasensetzvorrichtung beschrieben wurden.

Die obenstehende Aufgabe wird ferner gelöst durch ein erfindungsgemäßes Verfahren zur Verwendung wenigstens einer Blasensetzvorrichtung, wobei wenigstens die folgenden Schritte, vorzugsweise in der angegebenen Reihenfolge, durchgeführt werden:
a) Herausleiten eines Fluidstroms aus einer fluidführenden Rohrleitung durch die Blasensetzvorrichtung und
b) zumindest teilweises Auffangen des aus der fluidführenden Rohrleitung herausgeleiteten Fluidstroms in einem Auffangbehälter.

In anderen Worten kann es vorgesehen sein, dass bei einem erfindungsgemäßen Verfahren in einem ersten Schritt ein Fluidstrom aus einer fluidführenden Rohrleitung bzw. einem fluidführenden Rohrleitungsabschnitt durch eine Blasensetzvorrichtung, insbesondere durch eine Abgasleitung, herausgeleitet wird. In einem zweiten Schritt wird das aus der fluidführenden Rohrleitung bzw. dem betreffenden Rohrleitungsabschnitt herausgeleitete Gas in einem Auffangbehälter zumindest teilweise aufgefangen. Hierdurch ergibt sich der Vorteil, dass das aus der fluidführenden Rohrleitung herausgeleitete Gas nicht in die Umgebung entweicht und eine Umwelt- bzw. Klimaschädigung somit vermieden wird.

Durch das erfindungsgemäße Verfahren ergeben sich die gleichen Vorteile, wie sie bereits in Bezug auf die erfindungsgemäße Blasensetzvorrichtung bzw. das System erläutert wurden.

Die obenstehende Aufgabe wird ferner gelöst durch ein erfindungsgemäßes Verfahren zur Verwendung wenigstens einer Blasensetzvorrichtung, wobei wenigstens die folgenden Schritte, vorzugsweise in der angegebenen Reihenfolge, durchgeführt werden:
a) Herausleiten eines Fluidstroms aus einer fluidführenden Rohrleitung durch die Blasensetzvorrichtung und
c) zumindest teilweises Abbrennen des aus der fluidführenden Rohrleitung herausgeleiteten Fluidstroms durch eine Gasfackel.

In anderen Worten kann es vorgesehen sein, dass bei einem erfindungsgemäßen Verfahren in einem ersten Schritt ein Fluidstrom aus einer fluidführenden Rohrleitung bzw. einem fluidführenden Rohrleitungsabschnitt durch eine Blasensetzvorrichtung, insbesondere durch eine Abgasleitung, herausgeleitet wird. In einem zweiten Schritt wird das aus der fluidführenden Rohrleitung bzw. dem betreffenden Rohrleitungsabschnitt herausgeleitete Fluid einer Gasfackel zugeführt und in der bzw. durch die Gasfackel zumindest teilweise abgebrannt. Hierdurch ergibt sich der Vorteil, dass das aus der fluidführenden Rohrleitung herausgeleitete Gas nicht unbehandelt in die Umgebung entweicht und eine Umwelt- bzw. Klimaschädigung zumindest reduziert wird.

Durch das erfindungsgemäße Verfahren ergeben sich die gleichen Vorteile, wie sie bereits in Bezug auf die erfindungsgemäße Blasensetzvorrichtung bzw. das System erläutert wurden.

Wenigstens zwei Schritte eines erfindungsgemäßen Erfahrens, insbesondere die Schritte a) und b) und/oder a) und c) und/oder b) und c) können zumindest abschnittsweise simultan ablaufen. Auch kann bspw. die Erfassung wenigstens eines Messwertes erfolgen, während der Fluidstrom aus der fluidführenden Rohrleitung durch die Blasensetzvorrichtung herausgeleitet wird.

In Bezug auf die vorliegende Erfindung ist es vorstellbar, dass zusätzlich wenigstens einer der folgenden Schritte durchgeführt wird:
- Erfassen wenigstens eines Messwertes bzw. Sensordatensatzes durch wenigstens ein Sensorelement,
- Auswerten wenigstens eines durch wenigstens ein Sensorelement erfassten Messwertes bzw. Sensordatensatzes durch wenigstens eine Auswerteeinheit,
- Aktivieren und/oder Deaktivieren wenigstens einer Alarmfunktion in Abhängigkeit wenigstens eines Auswerteergebnisses, vorzugsweise durch eine Steuereinheit,
- Ansteuerung wenigstens einer Absperrvorrichtung in Abhängigkeit wenigstens eines Auswerteergebnisses, vorzugsweise durch eine Steuereinheit, zum Unterbinden und/oder Freigeben eines Fluidstroms in wenigstens einem Abschnitt wenigstens einer Abgasleitung,
- Anpassung des Betriebs wenigstens einer Mischungsvorrichtung und/oder Fluidfördervorrichtung in Abhängigkeit wenigstens eines Auswerteergebnisses.

Das Erfassen wenigstens eines Messwertes bzw. Sensordatensatzes kann dabei wenigstens einen der folgenden Schritte umfassen:
- Erfassen eines Volumens bzw. Volumenstroms und/oder einer Fließgeschwindigkeit des aus der fluidführenden Rohrleitung herausgeleiteten Fluidstroms, vorzugsweise in einer Abgasleitung der Blasensetzvorrichtung, durch wenigstens ein Sensorelement,
- Erfassen einer Dichte des aus der fluidführenden Rohrleitung herausgeleiteten Fluidstroms, vorzugsweise in einer Abgasleitung der Blasensetzvorrichtung, durch wenigstens ein Sensorelement,
- Erfassen einer Konzentration, vorzugsweise einer Erdgaskonzentration und/oder Methankonzentration, in dem aus der fluidführenden Rohrleitung herausgeleiteten Fluidstrom, vorzugsweise in einer Abgasleitung der Blasensetzvorrichtung, durch wenigstens ein Sensorelement,
- Erfassen einer Temperatur und/oder eines Drucks des aus der fluidführenden Rohrleitung herausgeleiteten Fluidstroms, vorzugsweise in einer Abgasleitung der Blasensetzvorrichtung, durch wenigstens ein Sensorelement,
- Erfassen wenigstens einer Positionsinformation zur aktuellen geografischen Position der Blasensetzvorrichtung durch wenigstens ein Sensorelement,
- Erfassen eines Umgebungsdrucks und/oder einer Umgebungstemperatur an der Blasensetzvorrichtung durch wenigstens ein Sensorelement,
- Zumindest abschnittsweises Überwachen der Umgebung der Blasensetzvorrichtung auf das Vorliegen einer erhöhten Erdgaskonzentration bzw. Methankonzentration und/oder Erfassen wenigstens eines aus der Blasensetzvorrichtung austretenden Leckagestroms durch wenigstens ein Sensorelement.

Bei der Erfassung eines Messparameters durch ein Sensorelement kann es sich um eine kontinuierliche bzw. quasikontinuierliche Erfassung handeln. In anderen Worten kann die Erfassung an mehreren zeitlich aufeinanderfolgenden Zeitpunkten erfolgen, sodass ein zeitlicher Verlauf der Messgröße bzw. des Messwertes ermittelbar bzw. auswertbar ist. Auf Grundlage des zeitlichen Verlaufs einer Messgröße kann ein, insbesondere zeitlich gemittelter, Mittelwert und/oder ein über den betreffenden Zeitraum kumulierter Messwert berechnet werden.

Das Auswerten wenigstens eines durch wenigstens ein Sensorelement erfassten Messwertes bzw. Sensordatensatzes kann dabei wenigstens einen der folgenden Schritte umfassen:
- Vergleichen wenigstens eines Messwertes mit einem, insbesondere vorab definierten, Grenzwert,
- Vergleichen wenigstens eines Messwertes mit wenigstens einem zweiten durch ein Sensorelement erfassten Messwert,
- Berechnen wenigstens eines, vorzugsweise zeitlichen, Mittelwerts wenigstens einer Messgröße, vorzugsweise einer Temperatur und/oder eines Drucks und/oder einer Dichte und/oder einer Durchflussgeschwindigkeit,
- Berechnen wenigstens eines, vorzugsweise über einen Zeitraum, kumulierten Messwertes wenigstens einer Messgröße, insbesondere eines Volumenstroms und/oder eines Massenstroms.

Bei dem Aktivieren und/oder Deaktivieren wenigstens einer Alarmfunktion kann es sich zumindest um die Aktivierung und/oder Deaktivierung der Aussendung akustischer und/oder optischer Warnsignale durch eine Alarmeinheit handeln.

Im Rahmen der Erfindung kann es von Vorteil sein, dass zusätzlich, vorzugsweise nach dem Schritt a) und/oder Schritt b) und/oder Schritt c), wenigstens einer der folgenden Schritte durchgeführt wird:
- Erstellen wenigstens eines Datensatzes umfassend wenigstens eine Fluidinformation,
- Signieren des wenigstens einen Datensatzes, vorzugsweise mit einer digitalen Signatur,
- Übermitteln des wenigstens einen bzw. wenigstens eines Datensatzes an ein mobiles Gerät und/oder einen zentralen Server, vorzugsweise durch eine Kommunikationseinheit,
- Speichern des wenigstens einen bzw. wenigstens eines Datensatzes auf dem mobilen Gerät und/oder dem zentralen Server.

Eine Fluidinformation kann wenigstens eine, durch ein Sensorelement erfasste Messgröße beinhalten. Die Fluidinformation kann einen zeitlichen Verlauf der Messgröße umfassen. Auch kann die Fluidinformation einen, vorzugsweise zeitlichen, Mittelwert der Messgröße umfassen. Auch kann die Fluidinformation einen, vorzugsweise über einen Zeitraum, kumulierten Wert der Messgröße umfassen. Vorzugsweise kann ein Datensatz eine Vielzahl von Fluidinformationen enthalten.

Vorzugsweise kann die Fluidinformation wenigstens einen, vorzugsweise alle der folgenden Parameter bzw. eine der folgenden Informationen enthalten:
- Die Gesamtmasse und/oder das Gesamtvolumen des aus der fluidführenden Rohrleitung herausgeleiteten Fluids,
- eine geografische Position der Blasensetzvorrichtung, vorzugsweise die geografische Position, an der sich die Blasensetzvorrichtung, insbesondere während Schritt a), befunden hat.

Das Erstellen wenigstens eines Datensatzes kann durch eine Steuereinheit und/oder Kommunikationseinheit der Blasensetzvorrichtung erfolgen. Das Übermitteln wenigstens eines Datensatzes kann wenigstens teilweise durch eine Kommunikationseinheit der Blasensetzvorrichtung erfolgen. Das Erstellen wenigstens eines Datensatzes und/oder das Übermitteln wenigstens eines Datensatzes kann insbesondere erst dann erfolgen, wenn die fluidführende Rohrleitung bzw. der betreffende Rohrleitungsabschnitt vollständig oder im Wesentlichen vollständig entleert wurde, insbesondere nach Schritt a) und/oder Schritt b) und/oder Schritt c).

Das Signieren wenigstens eines Datensatzes kann dazu eingesetzt werden die Echtheit des übermittelten Datensatzes bzw. des Absenders des Datensatzes auf dem mobilen Gerät und/oder dem zentralen Server zu verifizieren. So kann eine Manipulation der übermittelten Daten vermieden werden.

Der zentrale Rechner kann eine oder mehrere Recheneinheiten umfassen. Vorzugsweise kann der zentrale Rechner als ein Cloud-System ausgebildet sein. Hieraus ergibt sich der Vorteil, dass die an den zentralen Rechner übertragenen Daten einfach und unkompliziert von quasi beliebigen Geräten und/oder Orten zugänglich und/oder auswertbar sind. Das mobile Gerät kann als ein Laptop oder ein Mobiltelefon oder eine davon abweichende, insbesondere tragbare, Einheit ausgebildet sein. Das mobile Gerät kann wenigstens eine, vorzugsweise kabellose oder kabelgebundene, Kommunikationsschnittstelle zur Herstellung einer wenigstens temporären Kommunikationsverbindung mit wenigstens einer Kommunikationseinheit der Blasensetzvorrichtung und/oder einem Netzwerk, vorzugsweise dem Internet, und/oder wenigstens einem zentralen Server umfassen. Wenigstens eine Kommunikationsschnittstelle des mobilen Geräts kann in der Form einer Kommunikationsschnittstelle ausgebildet sein, wie diese in Bezug auf die Kommunikationseinheit der Blasensetzvorrichtung beschrieben wurde.

Das mobile Gerät und/oder der zentrale Server können wenigstens einen temporären oder persistenten Datenspeicher umfassen.

Wenigstens eine in einem erfindungsgemäßen Verfahren verwendete Blasensetzvorrichtung kann als eine erfindungsgemäße Blasensetzvorrichtung bzw. eine Blasensetzvorrichtung nach einem der Ansprüche 1 - 10 ausgebildet sein.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Die Erfindung ist in den folgenden Figuren dargestellt. Dabei zeigt
- Fig. 1: eine schematische Ansicht einer erfindungsgemäßen Blasensetzvorrichtung,
- Fig. 2: eine schematische Ansicht einer erfindungsgemäßen Blasensetzvorrichtung,
- Fig. 3: eine schematische Ansicht eines erfindungsgemäßen Systems,
- Fig. 4: eine schematische Ansicht eines erfindungsgemäßen Verfahrens und
- Fig. 5: eine schematische Ansicht eines erfindungsgemäßen Verfahrens.

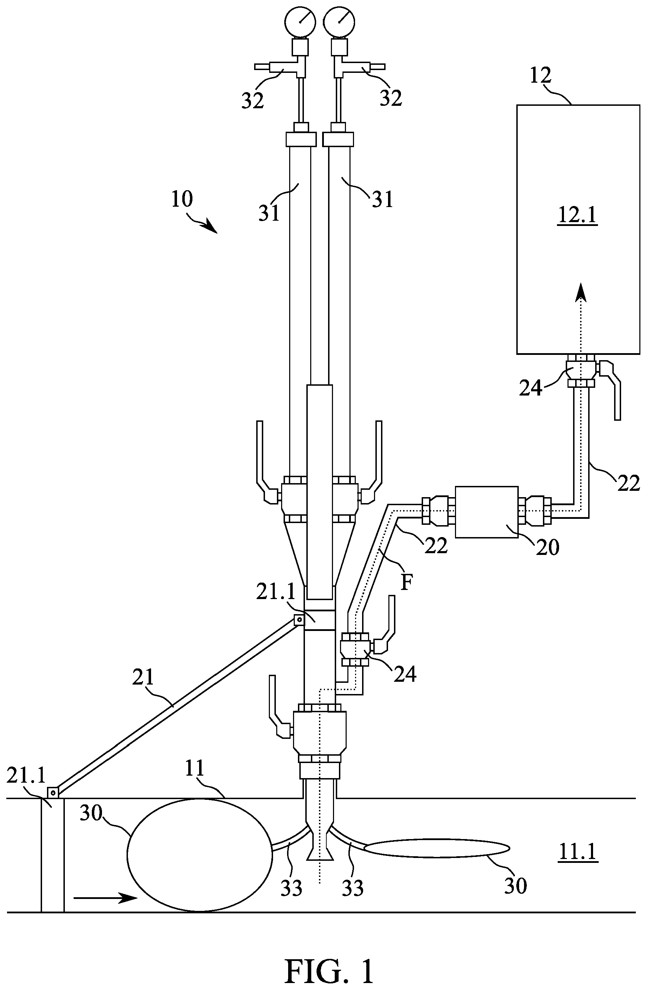

Fig. 1 zeigt eine schematische Ansicht einer erfindungsgemäßen Blasensetzvorrichtung 10 zum zumindest temporären Sperren und zumindest abschnittsweisen Entleeren wenigstens einer fluidführenden Rohrleitung 11. Die Blasensetzvorrichtung 10 umfasst zwei Absperrblasen 30. Jede der Absperrblasen 30 kann über einen Einführstutzen 31 in die fluidführende Rohrleitung 11 eingebracht werden. Beim Einbringen der Absperrblase 30 in die Rohrleitung 11 befindet sich diese in einem entspannten bzw. ungefüllten Zustand. Eine solche ungefüllte Absperrblase 30 ist in Fig. 1 auf der rechten Seite der Blasensetzvorrichtung 10 in der Rohrleitung 11 dargestellt. Vorzugsweise kann die Austrittsrichtung einer Absperrblase 30 in die Rohrleitung 11 bspw. durch Vorbiegung der Absperrblase 30 und/oder der zur Füllung der Absperrblase 30 mit der Absperrblase 30 verbundenen und/oder in Fluidkommunikation stehenden Druckleitung 33 gesteuert werden.

Wurde eine Absperrblase 30 in die fluidführende Rohrleitung 11 eingebracht, kann diese über die Druckleitung 33 bzw. den Druckanschluss 32 mit Druckluft oder einem anderen unter Druck stehenden Fluid befüllt werden, woraufhin sich die Absperrblase 30 in der Rohrleitung 11 ausdehnt und zumindest abschnittsweise in Kontakt mit der Innenwand der fluidführenden Rohrleitung 11 tritt, wodurch ein Fluidstrom in der Rohrleitung 11 verlangsamt bzw. unterbunden wird. Eine solche gefüllte Absperrblase 30 ist in Fig. 1 auf der linken Seite der Blasensetzvorrichtung 10 in der Rohrleitung 11 dargestellt.

Die in der fluidführenden Rohrleitung 11 ohne den Eingriff einer Blasensetzvorrichtung 10 vorherrschende Hauptströmungsrichtung ist in Fig. 1 durch den Pfeil in der fluidführenden Rohrleitung 11 dargestellt. Folglich erstreckt sich der durch die Blasensetzvorrichtung 10 entleerbare Rohrleitungsabschnitt 11.1 der fluidführenden Rohrleitung 11 von der gefüllten Absperrblase 30 ausgehend stromab entlang der Hauptströmungsrichtung. Der entleerbare Rohrleitungsabschnitt 11.1 der fluidführenden Rohrleitung 11 kann zu einer anderen Seite durch eine zweite Blasensetzvorrichtung 10 oder einen festen Rohrleitungsverschluss (Stichleitung) begrenzt sein. Das in der fluidführenden Rohrleitung 11 enthaltene Fluid weist einen gegenüber der Umgebung, insbesondere deutlich, erhöhten Druck auf.

Gemäß Fig. 1 wurde die Blasensetzvorrichtung 10 bereits auf die fluidführende Rohrleitung 11 aufgesetzt bzw. zumindest abschnittsweise in eine Bohrung in der Außenwand der fluidführenden Rohrleitung 11 eingebracht und der Fluidstrom in der Rohrleitung 11 durch die Absperrblase 30 angehalten bzw. im Wesentlichen angehalten. Um Arbeiten an dem Rohrleitungsabschnitt 11.1 durchführen zu können, muss zunächst das in dem Rohrleitungsabschnitt 11.1 enthaltene Fluid aus der Rohrleitung 11 entfernt werden.

Hierzu weist die Blasensetzvorrichtung 10 einen Auffangbehälter 12 zum zumindest teilweisen Auffangen 102 eines durch die Blasensetzvorrichtung 10 aus der fluidführenden Rohrleitung 11 herausleitbaren Fluidstroms F auf. Dabei tritt der Fluidstrom F in den Innenraum 12.1 des Auffangbehälters 12 ein und kann in diesem zumindest temporär zwischengespeichert werden. Der Fluidstrom F ist in Fig. 1 durch die gepunktete Linie gekennzeichnet. Entsprechend kann das in dem fluidführenden Rohrleitungsabschnitt 11.1 eingeschlossene Fluid, insbesondere Erdgas, nicht unkontrolliert bzw. unbehandelt in die Umgebung entweichen, wenn der Rohrleitungsabschnitt 11.1 als Vorbereitung für durchzuführende Wartungs- und/oder Reparaturarbeiten zumindest teilweise entleert bzw. der Innendruck in dem Rohrleitungsabschnitt 11.1 reduziert wird. Vielmehr kann das aus der Rohrleitung 11 bzw. dem Rohrleitungsabschnitt 11.1 herausgeleitete Fluid, insbesondere Erdgas, in dem Auffangbehälter 12 aufgefangen und anschließend einer weiteren Verwendung und/oder kontrollierten Entsorgung zugeführt werden. Auch ist es denkbar, dass das Fluid nach Beendigung der Arbeiten an der Rohrleitung 11 aus dem Auffangbehälter 12 wieder in die Rohrleitung 11 bzw. den Rohrleitungsabschnitt 11.1 zurückgeführt wird.

Der Auffangbehälter 12 ist in Fig. 1 lediglich schematisch dargestellt und kann in seinen Dimensionen, zumindest im gefüllten Zustand, deutlich größer ausgebildet sein als die Blasensetzvorrichtung.

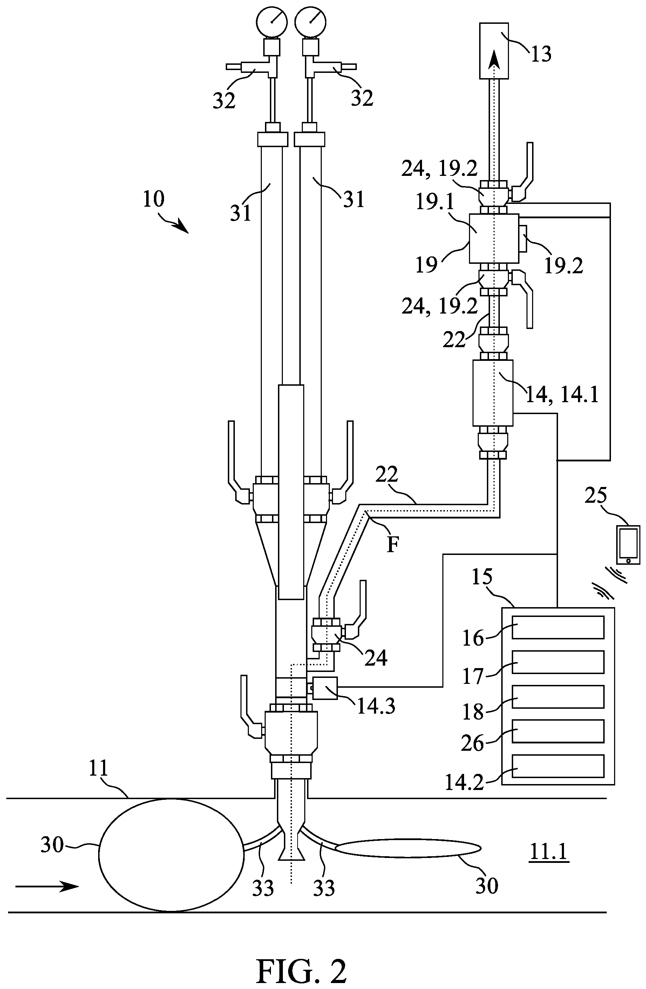

Fig. 2 zeigt eine schematische Darstellung einer erfindungsgemäßen Blasensetzvorrichtung 10 zum zumindest temporären Sperren und zumindest abschnittsweisen Entleeren wenigstens einer fluidführenden Rohrleitung 11 bzw. eines fluidführenden Rohrleitungsabschnittes 11.1 der fluidführenden Rohrleitung 11. Die Blasensetzvorrichtung 10 umfasst eine Gasfackel 13 zum zumindest teilweisen Abbrennen 103 eines durch die Blasensetzvorrichtung 10 aus der fluidführenden Rohrleitung 11 bzw. dem Rohrleitungsabschnitt 11.1 herausleitbaren bzw. herausgeleiteten Fluidstroms F. Somit kann das in dem fluidführenden Rohrleitungsabschnitt 11.1 eingeschlossene Fluid, insbesondere Erdgas, nicht unkontrolliert bzw. unbehandelt in die Umgebung entweichen, wenn der betreffende Rohrleitungsabschnitt 11.1 als Vorbereitung für durchzuführende Wartungs- und/oder Reparaturarbeiten zumindest teilweise entleert bzw. der Innendruck in dem Rohrleitungsabschnitt 11.1 reduziert wird. Vielmehr kann das aus der Rohrleitung 11 bzw. dem Rohrleitungsabschnitt 11.1 herausgeleitete Fluid, insbesondere Erdgas, durch die Gasfackel 13 kontrolliert verbrannt werden. Hierdurch gelangen zwar die durch die Verbrennung entstehenden Verbrennungsprodukte wie bspw. CO2 in die Atmosphäre, jedoch nicht das unbehandelte Fluid bzw. Erdgas, wodurch die Umwelt- bzw. Klimaschädlichkeit gegenüber einer unbehandelten Abgabe des Fluids bzw. Erdgases an die Atmosphäre deutlich verringert werden kann.

Die Gasfackel 13 ist in Fig. 2 lediglich schematisch dargestellt und kann in ihrer Größe von der Darstellung in Fig. 2 abweichen. So ist bei der Dimensionierung auf die erwartungsgemäß zu verbrennende Gasmenge Rücksicht zu nehmen. Auch die Position der Gasfackel 13 in Bezug auf die Blasensetzvorrichtung 10 ist lediglich schematisch dargestellt. Der Abstand der Gasfackel 13 zur Blasensetzvorrichtung 10 kann deutlich größer als in Fig. 2 dargestellt ausgebildet sein. Hierbei ist insbesondere darauf zu achten, dass möglicherweise aus der Blasensetzvorrichtung 10 austretende Leckageströme eines Fluids, insbesondere eines Erdgases, nicht versehentlich durch die die brennende Gasfackel 13 entzündet werden können.

Die Blasensetzvorrichtungen 10 der Fig. 1 und 2 umfassen eine Abgasleitung 22 zum Herausleiten 101 eines Fluidstroms F aus der fluidführenden Rohrleitung 11 bzw. dem Rohrleitungsabschnitt 11.1. Hierzu ist ein Ende der Abgasleitung 22 derart angeordnet, dass es, insbesondere wenn die Blasensetzvorrichtung 10 an einer fluidführenden Rohrleitung 11 angeordnet ist, mit dem Innenraum der fluidführenden Rohrleitung 11 in Fluidkommunikation bringbar ist, sodass das in der Rohrleitung 11 geführte Fluid von der Rohrleitung 11 in die Abgasleitung 22 einströmen kann. Ein weiteres Ende der Abgasleitung 22 steht in Bezug auf Fig. 1 in Fluidkommunikation mit dem Auffangbehälter 12 bzw. dem Innenraum 12.1 des Auffangbehälters 12 und in Bezug auf Fig. 2 in Fluidkommunikation mit einer Mischungsvorrichtung 19 bzw. einer Gasfackel 13. Somit kann der aus der fluidführenden Rohrleitung 11 bzw. dem Rohrleitungsabschnitt 11.1 herausgeleitete Fluidstrom F durch die Abgasleitung 22 der Blasensetzvorrichtung 10 dem Auffangbehälter 12 und/oder der Gasfackel 13 zugeführt werden.

Der in Fig. 1 und 2 gezeigte Verlauf der Abgasleitung 22 ist lediglich schematischer Natur und kann den individuellen Anforderungen frei angepasst werden. Insbesondere in Bezug auf eine Durchflussmessung in der Abgasleitung 22 kann es von Vorteil sein, wenn die Abgasleitung 22 zumindest abschnittsweise vertikal oder im Wesentlichen vertikal verläuft und vorzugsweise die Durchflussmessung in dem vertikal verlaufenden Abschnitt der Abgasleitung 22 durchgeführt wird.

Die Abgasleitung 22 umfasst wenigstens eine Absperrvorrichtung 24, wobei ein Fluidstrom F durch die Abgasleitung 22 durch die Absperrvorrichtung 24 zumindest abschnittsweise bzw. temporär unterbrochen werden kann. So kann ein Austritt des Fluidstroms F in den Auffangbehälter 12 und/oder die Gasfackel 13 gezielt unterbrochen bzw. aktiviert werden. Die Absperrvorrichtungen 24 sind als Kugelhähne ausgebildet.

Fig. 1 ist zu entnehmen, dass die Blasensetzvorrichtung 10 eine Fluidfördervorrichtung 20 umfasst, wobei durch die Fluidfördervorrichtung 20 ein Unterdruck in zumindest einem Abschnitt der Abgasleitung 22 erzeugbar ist. In Bezug auf einen Fluidstrom F aus der fluidführenden Rohrleitung 11 in den Auffangbehälter 12 ergibt sich hieraus der Vorteil, dass ein Fluidstrom F aus der fluidführenden Rohrleitung 11 weiter in den Auffangbehälter 12 förderbar ist, auch wenn der Druckgradient zwischen Auffangbehälter 12 und fluidführender Rohrleitung 11 einen natürlichen Fluidstrom F nicht mehr zulassen würde. So kann eine vollständige oder im Wesentlichen vollständige Entleerung der fluidführenden Rohrleitung 11 bzw. des betreffenden Rohrleitungsabschnittes 11.1 zuverlässig sichergestellt werden.

Die Arbeitsrichtung der Fluidfördervorrichtung 20 ist umkehrbar, sodass durch die Fluidfördervorrichtung 20 sowohl ein Fluidstrom F aus der fluidführenden Rohrleitung 11 in den Auffangbehälter 12 förderbar ist, als auch ein Fluidstrom F aus dem Auffangbehälter 12 in die fluidführende Rohrleitung 11 förderbar ist. So kann bspw. nach dem Abschluss von Wartungsarbeiten an der fluidführenden Rohrleitung 11 das in dem Auffangbehälter 12 aufgefangene Fluid zumindest teilweise wieder in die fluidführende Rohrleitung 11 zurückgeführt werden.

Fig. 1 ist ferner zu entnehmen, dass die Blasensetzvorrichtung 10 wenigstens ein Sicherungselement 21 zur zumindest temporären Fixierung der Blasensetzvorrichtung 10 an der fluidführenden Rohrleitung 11 umfasst. Das Sicherungselement 21 ist zumindest abschnittsweise als starres Stabelement 21.2 ausgebildet, wobei an jedem Ende des Stabelements 21.2 eine Rohrschelle 21.1 angeordnet ist. Über die Rohrschellen 21.1 kann das Stabelement 21.2 mit einem Abschnitt der Blasensetzvorrichtung 10 und einem Abschnitt der fluidführenden Rohrleitung 11 formschlüssig und/oder kraftschlüssig verbunden werden, um die Blasensetzvorrichtung 10 in ihrer Position auf der fluidführenden Rohrleitung 11 zu fixieren. Aus Übersichtsgründen ist in Fig. 1 lediglich ein Sicherungselement 21 dargestellt. Die Anordnung mehrerer Sicherungselemente 21 kann jedoch vorgesehen sein bzw. ist durch den Gedanken der Erfindung umfasst. Vorzugsweise können wenigstens zwei, insbesondere gegenüber voneinander angeordnete bzw. anordenbare Sicherungselemente 21 umfasst sein, um eine sichere Positionierung der Blasensetzvorrichtung 10 zu gewährleisten.

Fig. 2 ist zu entnehmen, dass die Blasensetzvorrichtung 10 eine Mischungsvorrichtung 19 umfasst. Die Mischungsvorrichtung 19 ist in Bezug auf den eingezeichneten Fluidstrom F vor der Gasfackel 13 angeordnet und dient zur Mischung des aus der fluidführenden Rohrleitung 11 herausgeleiteten Fluidstroms F mit wenigstens einem weiteren in die Mischungsvorrichtung 19 eingebrachten Fluid. Das zusätzlich eingebrachte Fluid kann Sauerstoff und/oder ein sauerstoffhaltiges Fluidgemisch, insbesondere Luft sein und über den Fluidanschluss 19.2 in die Mischungsvorrichtung 19 bzw. den Mischungsraum 19.1 der Mischungsvorrichtung 19 eingeleitet werden. Der Fluidstrom F wird über die Abgasleitung 22 bzw. über eine weiteren Fluidanschluss 19.2 der Mischungsvorrichtung 19 in die Mischungsvorrichtung 19 eingebracht, wobei die Mischungsvorrichtung 19 bzw. der Fluidanschluss 19.2 der Mischungsvorrichtung 19 über eine Schraubverbindung reversibel bzw. kraftschlüssig und/oder formschlüssig und/oder gasdicht mit der Abgasleitung 22 verbunden ist. Über einen weiteren Fluidanschluss 19.2 ist die Gasfackel 13 mit der Mischungsvorrichtung 19 verbunden, sodass das in dem Mischungsraum 19.1 der Mischungsvorrichtung 19 hergestellte Fluidgemisch der Gasfackel 13 zugeführt werden kann. Durch die Mischung des Fluidstroms F mit wenigstens einem weiteren Fluid, insbesondere Sauerstoff oder Luft, kann ein für eine stöchiometrische oder überstöchiometrische Verbrennung ausreichender Sauerstoffanteil in dem der Gasfackel 13 zur Verbrennung zugeführten Fluidstrom F sichergestellt werden. Hierdurch wird eine unvollständige Verbrennung und somit eine Abgabe unbehandelter Fluidreste an die Umgebung vermieden.

Fig. 2 ist ferner zu entnehmen, dass die Blasensetzvorrichtung 10 wenigstens ein Sensorelement 14 umfasst. Vorliegend umfasst die Blasensetzvorrichtung 10 wenigstens drei Sensorelemente 14.1, 14.2, 14.3. Das erste Sensorelement 14.1 ist dazu ausgebildet, wenigstens eine Messgröße in der Abgasleitung 22 bzw. in dem durch die Abgasleitung 22 geführten Fluidstrom F zu erfassen. Vorliegend erlaubt das erste Sensorelement 14.1 eine integrierte Erfassung mehrerer auf den Fluidstrom F bezogener Messgrößen. Denkbar ist es ebenfalls, dass die nachfolgend erläuterten Messgrößen zumindest teilweise durch separate Sensorelemente 14 und/oder in anderen Bereichen und/oder Abschnitten der Abgasleitung 22 erfasst werden.

Das erste Sensorelement 14.1 ist zur Erfassung der Durchflussgeschwindigkeit bzw. des Volumens und/oder des Volumenstroms des aus der fluidführenden Rohrleitung 11 herausgeleiteten Fluidstroms F ausgebildet. Ferner ist das erste Sensorelement 14.1 zur Erfassung eines Drucks und einer Temperatur des aus der fluidführenden Rohrleitung 11 herausgeleiteten Fluidstroms F ausgebildet. Somit kann durch das erste Sensorelement 14.1 zuverlässig der Massenstrom bzw. die Masse des aus der fluidführenden Rohrleitung 11 herausgeleiteten Fluidstroms F bzw. Fluids ermittelt werden. Ferner ist das erste Sensorelement 14.1 dazu ausgebildet, eine Konzentration, vorzugsweise eine Erdgaskonzentration und/oder Methankonzentration in dem aus der fluidführenden Rohrleitung 11 herausgeleiteten Fluidstrom F zu erfassen. Hierdurch kann, insbesondere beim Vorliegen eines Fluidgemisches in der fluidführenden Rohrleitung 11 bzw. dem fluidführenden Rohrleitungsabschnitt 11.1, beurteilt werden ob der Erdgasanteil bzw. Methananteil in dem durch die Blasensetzvorrichtung 10 herausgeleiteten Fluidstrom F für eine Entzündung und/oder eine stabile Verbrennung in der Gasfackel 13 ausreichend ist. Auch kann die erforderliche Menge Luft bzw. Sauerstoffmenge für eine stöchiometrische oder überstöchiometrische zumindest teilweise Verbrennung des Fluidstroms F in der Gasfackel 13 ermittelt werden.

Das erste Sensorelement 14.1 weist einen rohrförmigen Abschnitt auf, wobei der rohrförmige Abschnitt des ersten Sensorelements 14.1 an einer ersten Seite mit einem ersten Teil der Abgasleitung 22 verbunden ist, sodass der Fluidstrom F aus einem ersten Teil der Abgasleitung 22 in den rohrförmigen Abschnitt des ersten Sensorelements 14.1 einströmen kann und wobei der rohrförmige Abschnitt an einer zweiten Seite mit einem zweiten Teil der Abgasleitung 22 verbunden ist, sodass der Fluidstrom F aus dem rohrförmigen Abschnitt des zweiten Sensorelements 14.2 in den zweiten Abschnitt der Abgasleitung 22 und weiter in Richtung der Gasfackel 13 ausströmen kann. Die Messung bzw. Erfassung der Messgrößen erfolgt zumindest teilweise in dem rohrförmigen Abschnitt des ersten Sensorelements 14.1.

Wenigstens das erste Sensorelement 14.1 ist für eine zeitaufgelöste Erfassung ausgebildet und erlaubt somit eine kontinuierliche bzw. quasikontinuierliche Erfassung. Aus dem zeitlichen Verlauf des erfassten Volumenstroms kann eine kumulative Auswertung wenigstens einer Messgröße, insbesondere eines Volumenstroms und/oder Massenstroms, des aus der fluidführenden Rohrleitung 11 herausgeleiteten Fluidstroms F erfolgen.

Ferner umfasst die Blasensetzvorrichtung 10 ein zweites Sensorelement 14.2 zur Erfassung wenigstens einer Positionsinformation zur aktuellen geografischen Position der Blasensetzvorrichtung 10. Das zweite Sensorelement 14.2 ist in die Steuereinheit 15 der Blasensetzvorrichtung 10 integriert. Das zweite Sensorelement 14.2 ist vorliegend als GPS-Sensor ausgebildet. So kann über das zweite Sensorelement 14.2 der Ort, an dem Verbrennungsgase und/oder ggf. Mengen eines unbehandelten bzw. unverbrannten Fluids in die Atmosphäre abgegeben wurden, dokumentiert und für eine nachfolgende Auswertung festgehalten werden.

Ferner umfasst die Blasensetzvorrichtung 10 ein drittes Sensorelement 14.3 zur Erfassung eines aus der Blasensetzvorrichtung 10 austretenden Leckagestroms bzw. einer Leckage des aus der fluidführenden Rohrleitung 11 herausgeleiteten Fluidstroms F in die Umgebung der Blasensetzvorrichtung 10. Das dritte Sensorelement 14.3 ist zur Erfassung einer Gaskonzentration, insbesondere Erdgaskonzentration und/oder Methankonzentration, in der Umgebungsluft ausgebildet. Ein unkontrollierter Austritt des Fluidstroms F in die nähere Umgebung der Blasensetzvorrichtung 10 kann insbesondere im Falle einer Brennbarkeit des Fluidstroms F ein unmittelbares Risiko für anwesende Benutzer und umliegende Infrastrukturen darstellen, weshalb über eine sensorische Erfassung einer Leckage durch das dritte Sensorelement 14.3 an der Blasensetzvorrichtung 10 die Arbeitssicherheit erhöht werden kann.

Mit Bezug zu Fig. 2 umfasst die Blasensetzvorrichtung 10 ferner wenigstens eine Steuereinheit 15, wenigstens eine Kommunikationseinheit 16, wenigstens eine Auswerteeinheit 17 und wenigstens eine Alarmeinheit 18, und wenigstens eine Anzeigeeinheit 26, wobei die Kommunikationseinheit 16, die Auswerteeinheit 17, die Alarmeinheit 18 und die Anzeigeeinheit 26 in die Steuereinheit 15 integriert sind.

Die Steuereinheit 15 ist zumindest temporär in Signalverbindung bzw. Kommunikationsverbindung mit der Kommunikationseinheit 16, der Auswerteeinheit 17, der Alarmeinheit 18, den Sensorelementen 14, wenigstens einer Absperrvorrichtung 24 und der Mischungsvorrichtung 19 bringbar, sodass diese zumindest teilweise durch die Steuereinheit 15 steuerbar sind und/oder Daten, vorzugsweise Messdaten und/oder Sensordatensätze austauschen können. Dies gilt in analoger Weise für die in Fig. 1 dargestellte Fluidfördervorrichtung.

Die Kommunikationseinheit 16 umfasst wenigstens eine nicht dargestellte Kommunikationsschnittstelle zur drahtlosen oder drahtgebundenen Kommunikation mit der Steuereinheit 15 und/oder einem mobilen Gerät 25. So können die in der Steuereinheit 15 empfangenen und durch die Sensorelemente 14 erfassten Sensordaten zumindest teilweise an das mobile Gerät 25 und/oder einen zentralen Server weiterkommuniziert werden. Vorliegend ist wenigstens eine Kommunikationsschnittstelle der Kommunikationseinheit 16 als Mobilfunkschnittstelle ausgebildet, sodass eine Kommunikation zwischen der Kommunikationseinheit 16 und dem mobilen Gerät 25 über ein Mobilfunknetz durchführbar ist.

Die Auswerteeinheit 17 dient zur Auswertung wenigstens eines Sensordatensatzes und/oder wenigstens eines durch ein Sensorelement 14 erfassten Messwertes. Ein durch die Auswerteeinheit 17 ermitteltes Auswerteergebnis kann von der Auswerteeinheit 17 an die Steuereinheit 15 übermittelt werden. Auf der Grundlage eines Auswerteergebnisses können ferner Entscheidungen über den Betrieb bzw. eine Anpassung des Betriebs der Blasensetzvorrichtung, insbesondere in der Steuereinheit, getroffen werden. Die Auswerteeinheit 17 ist zumindest temporär in Signalverbindung bzw. Kommunikationsverbindung mit der Steuereinheit 15 bringbar, sodass ein durch ein Sensorelement 14 erfasster Messwert durch die Steuereinheit 15 an die Auswerteeinheit 17 kommunizierbar ist und ein durch die Auswerteeinheit 17 ermitteltes Auswerteergebnis von der Auswerteeinheit 17 an die Steuereinheit 15 übermittelbar ist bzw. durch die Steuereinheit 15 empfangbar ist.

Die Alarmeinheit 18 dient zur zumindest temporären Aussendung akustischer und/oder optischer Warnsignale und umfasst wenigstens ein nicht dargestelltes Leuchtmittel zur Aussendung optischer Warnsignale und wenigstens eine nicht dargestellte Lautsprechereinheit zur Aussendung akustischer Warnsignale. Die Alarmeinheit 18 dient zur zumindest temporären Ausendung akustischer und/oder optischer Warnsignale. Die Alarmeinheit 18 ist zumindest temporär in Signalverbindung bzw. Kommunikationsverbindung mit der Steuereinheit 15 bringbar, sodass durch die Steuereinheit 15 eine Aussendung von akustischen und/oder optischen Warnsignalen durch die Alarmeinheit 18 aktivierbar und/oder deaktivierbar ist.

Die Anzeigeeinheit 26 dient zur Anzeige wenigstens einer Sensorinformation bzw. wenigstens eines durch wenigstens ein Sensorelement 14 erfassten Messwertes. Hierdurch ergibt sich der Vorteil, dass die durch wenigstens ein Sensorelement 14 erfassten Messwerte für einen Benutzer der Blasensetzvorrichtung 10 auf der Anzeigeeinheit 26 darstellbar sind und eine Überwachung des Betriebs der Blasensetzvorrichtung 10 durch den Benutzer somit vereinfacht bzw. ermöglicht wird. Hierzu umfasst die Anzeigeeinheit 26 ein nicht dargestelltes Display.

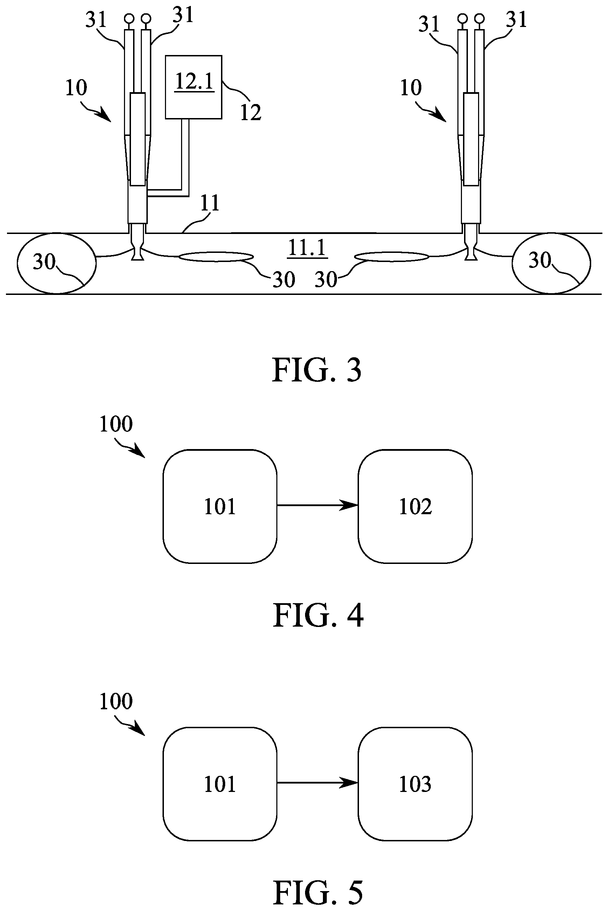

Fig. 3 zeigt eine schematische Ansicht eines erfindungsgemäßen Systems 50, umfassend wenigstens zwei Blasensetzvorrichtungen 10, wobei wenigstens eine Blasensetzvorrichtung 10 eine erfindungsgemäße Blasensetzvorrichtung 10 ist bzw. nach einem der Ansprüche 1 - 10 ausgebildet ist. Vorliegend ist die in Fig. 3 links angeordnete Blasensetzvorrichtung 10 eine erfindungsgemäße Blasensetzvorrichtung 10 mit einem Auffangbehälter 12.

Die Blasensetzvorrichtungen 10 sind an verschiedenen Positionen entlang der Längserstreckung der fluidführenden Rohrleitung 11 angeordnet, sodass durch die Absperrblasen 30 ein Rohrleitungsabschnitt 11.1 eingegrenzt wird. Dieser Rohrleitungsabschnitt 11.1 kann mit Hilfe wenigstens einer der Blasensetzvorrichtungen 10 auf die bereits beschriebene Art und Weise zumindest teilweise entleert werden bzw. kann der Druck in dem Rohrleitungsabschnitt 11.1 gemindert werden, indem ein Fluidstrom F aus der fluidführenden Rohrleitung 11 bzw. dem betreffenden Abschnitt 11.1 durch zumindest eine Blasensetzvorrichtung 10 herausgeleitet wird.

Vorliegend kann der herausgeleitete Fluidstrom F in dem Auffangbehälter 12 der in Fig. 3 auf der linken Seite befindlichen Blasensetzvorrichtung 10 aufgefangen werden. Alternativ oder zusätzlich wäre ein zumindest teilweises Abbrennen 103 des Fluidstroms F in einer Gasfackel 13 einer erfindungsgemäßen Blasensetzvorrichtung 10 denkbar.

Die Blasensetzvorrichtungen 10 sind in Fig. 3 der Übersicht halber lediglich stark vereinfacht dargestellt. Die in den Fig. 1 und 2 dargestellten Ausführungsformen bzw. die im Rahmen dieser Erfindung beschriebenen Ausführungsformen von Blasensetzvorrichtungen 10 sind in gleicher Weise für die in Fig. 3 dargestellten Blasensetzvorrichtungen 10 denkbar.

Fig. 4 zeigt eine schematische Darstellung eines erfindungsgemäßen Verfahrens 100, wobei wenigstens die folgenden Schritte durchgeführt werden:
a) Herausleiten 101 eines Fluidstroms F aus einer fluidführenden Rohrleitung 11 durch die Blasensetzvorrichtung und
b) zumindest teilweises Auffangen 102 des aus der fluidführenden Rohrleitung 11 herausgeleiteten Fluidstroms F in einem Auffangbehälter.

Fig. 5 zeigt eine schematische Darstellung eines erfindungsgemäßen Verfahrens 100, wobei wenigstens die folgenden Schritte durchgeführt werden:
a) Herausleiten 101 eines Fluidstroms F aus einer fluidführenden Rohrleitung 11 durch die Blasensetzvorrichtung und
d) zumindest teilweises Abbrennen 103 des aus der fluidführenden Rohrleitung 11 herausgeleiteten Fluidstroms F durch eine Gasfackel.

### Bezugszeichenliste

- 10: Blasensetzvorrichtung
- 11: Rohrleitung
- 11.1: Rohrleitungsabschnitt
- 12: Auffangbehälter
- 12.1: Innenraum
- 13: Gasfackel
- 14: Sensorelement
- 14.1: erstes Sensorelement
- 14.2: zweites Sensorelement
- 14.3: drittes Sensorelement
- 15: Steuereinheit
- 16: Kommunikationseinheit
- 17: Auswerteeinheit
- 18: Alarmeinheit
- 19: Mischungsvorrichtung
- 19.1: Mischungsraum
- 19.2: Fluidanschluss
- 20: Fluidfördervorrichtung
- 21: Sicherungselement
- 21.1: Rohrschelle
- 21.2: Stabelement
- 22: Abgasleitung
- 24: Absperrvorrichtung
- 25: mobiles Gerät
- 26: Anzeigeeinheit
- 30: Absperrblase
- 31: Einführstutzen
- 32: Druckanschluss
- 33: Druckleitung
- 50: System
- 100: Verfahren
- 101: Herausleiten
- 102: Auffangen
- 103: Abbrennen
- F: Fluidstrom

## Patentansprüche

1. Blasensetzvorrichtung (10) zum zumindest temporären Sperren und zumindest abschnittsweisen Entleeren wenigstens einer fluidführenden Rohrleitung (11) umfassend wenigstens einen Auffangbehälter (12) zum zumindest teilweisen Auffangen eines durch die Blasensetzvorrichtung (10) aus der fluidführenden Rohrleitung (11) herausleitbaren Fluidstroms (F),
**dadurch gekennzeichnet, dass**
wenigstens ein Sensorelement (14) umfasst ist, wobei durch das Sensorelement ein Volumenstrom und/oder eine Fließgeschwindigkeit und/oder ein Massenstrom des aus der fluidführenden Rohrleitung (11) herausgeleiteten Fluidstroms (F) erfassbar ist.

2. Blasensetzvorrichtung (10) zum zumindest temporären Sperren und zumindest abschnittsweisen Entleeren wenigstens einer fluidführenden Rohrleitung (11) umfassend wenigstens eine Gasfackel (13) zum zumindest teilweisen Abbrennen eines durch die Blasensetzvorrichtung (10) aus der fluidführenden Rohrleitung (11) herausleitbaren Fluidstroms (F),
**dadurch gekennzeichnet, dass**
wenigstens ein Sensorelement (14) umfasst ist, wobei durch das Sensorelement ein Volumenstrom und/oder eine Fließgeschwindigkeit und/oder ein Massenstrom des aus der fluidführenden Rohrleitung (11) herausgeleiteten Fluidstroms (F) erfassbar ist.

3. Blasensetzvorrichtung (10) nach einem der vorhergehenden Ansprüche,
**dadurch gekennzeichnet,**
**dass** wenigstens ein Sensorelement (14) umfasst ist, wobei durch das Sensorelement (14) wenigstens eine Temperatur und/oder ein Druck und/oder eine Dichte des aus der fluidführenden Rohrleitung (11) herausgeleiteten Fluidstroms (F), vorzugsweise kontinuierlich, erfassbar ist.

4. Blasensetzvorrichtung (10) nach einem der vorhergehenden Ansprüche,
**dadurch gekennzeichnet,**
**dass** wenigstens ein Sensorelement (14) umfasst ist, wobei durch das Sensorelement (14) wenigstens eine Konzentration, vorzugsweise eine Erdgaskonzentration, in dem aus der fluidführenden Rohrleitung (11) herausgeleiteten Fluidstrom (F), vorzugsweise kontinuierlich, erfassbar ist, und/oder dass wenigstens ein Sensorelement (14) umfasst ist, wobei durch das Sensorelement (14) wenigstens eine Positionsinformation zur aktuellen geografischen Position der Blasensetzvorrichtung (10) erfassbar ist.

5. Blasensetzvorrichtung (10) nach einem der vorhergehenden Ansprüche,
**dadurch gekennzeichnet,**
**dass** wenigstens ein Sensorelement (14) umfasst ist, wobei durch das Sensorelement (14) wenigstens ein aus der Blasensetzvorrichtung (10) austretender Leckagestrom erfassbar ist, und/oder
**dass** wenigstens eine Steuereinheit (15) zur zumindest teilweise automatisierten Steuerung der Blasensetzvorrichtung (10) umfasst ist.

6. Blasensetzvorrichtung (10) nach einem der vorhergehenden Ansprüche,
**dadurch gekennzeichnet,**
**dass** wenigstens eine Kommunikationseinheit (16) umfasst ist, wobei die Kommunikationseinheit (16) wenigstens eine Kommunikationsschnittstelle zur drahtlosen oder drahtgebundenen Kommunikation mit wenigstens einem mobilen Gerät (25) und/oder wenigstens einem zentralen Server und/oder wenigstens einem Sensorelement (14) der Blasensetzvorrichtung (10) aufweist.

7. Blasensetzvorrichtung (10) nach einem der vorhergehenden Ansprüche,
**dadurch gekennzeichnet,**
**dass** wenigstens eine Auswerteeinheit (17) zur Auswertung wenigstens eines Sensordatensatzes umfasst ist, und/oder
**dass** wenigstens eine Alarmeinheit (18) zur zumindest temporären Aussendung akustischer und/oder optischer Warnsignale umfasst ist.

8. Blasensetzvorrichtung (10) nach einem der vorhergehenden Ansprüche,
**dadurch gekennzeichnet,**
**dass** wenigstens eine Mischungsvorrichtung (19) zur Mischung des aus der fluidführenden Rohrleitung (11) herausgeleiteten Fluidstroms (F) mit wenigstens einem weiteren in die Mischungsvorrichtung (19) eingebrachten Fluid (F) umfasst ist, und/oder dass wenigstens eine Fluidfördervorrichtung (20) zur zumindest teilweisen Evakuierung der fluidführenden Rohrleitung (11) und/oder zur zumindest teilweisen Evakuierung des Auffangbehälters (12) umfasst ist.

9. Blasensetzvorrichtung (10) nach einem der vorhergehenden Ansprüche,
**dadurch gekennzeichnet,**
**dass** wenigstens ein Sicherungselement (21) zur zumindest temporären Fixierung der Blasensetzvorrichtung (10) an der fluidführenden Rohrleitung (11) umfasst ist.

10. System (50) zum zumindest temporären Sperren und/oder zumindest abschnittsweisen Entleeren wenigstens einer fluidführenden Rohrleitung (11) umfassend wenigstens zwei Blasensetzvorrichtungen (10), wobei wenigstens eine Blasensetzvorrichtung (10) nach einem der Ansprüche 1 - 9 ausgebildet ist.

11. Verfahren (100) zur Verwendung wenigstens einer Blasensetzvorrichtung (10), die nach einem der Ansprüche 1 oder 3 - 9 wenn von Anspruch 1 abhängig ausgebildet ist, wobei wenigstens die folgenden Schritte, vorzugsweise in der angegebenen Reihenfolge, durchgeführt werden:
a) Herausleiten (101) eines Fluidstroms (F) aus einer fluidführenden Rohrleitung (11) durch die Blasensetzvorrichtung (10) und
b) zumindest teilweises Auffangen (102) des aus der fluidführenden Rohrleitung (11) herausgeleiteten Fluidstroms (F) in einem Auffangbehälter (12),
wobei zusätzlich der folgende Schritt durchgeführt wird:
• Erfassen wenigstens eines Messwertes durch wenigstens ein Sensorelement (14), wobei das Erfassen wenigstens eines Messwerts das Erfassen eines Volumenstroms und/oder einer Fließgeschwindigkeit und/oder einer Dichte des aus der fluidführenden Rohrleitung (11) herausgeleiteten Fluidstroms (F) durch das Sensorelement (14) umfasst.

12. Verfahren (100) zur Verwendung wenigstens einer Blasensetzvorrichtung (10), die nach einem der Ansprüche 2 oder 3 - 9, wenn von Anspruch 2 abhängig, ausgebildet ist,
wobei wenigstens die folgenden Schritte, vorzugsweise in der angegebenen Reihenfolge, durchgeführt werden:
a) Herausleiten (101) eines Fluidstroms (F) aus einer fluidführenden Rohrleitung (11) durch die Blasensetzvorrichtung (10) und
c) zumindest teilweises Abbrennen (103) des aus der fluidführenden Rohrleitung (11) herausgeleiteten Fluidstroms (F) durch eine Gasfackel (13),
wobei zusätzlich der folgende Schritt durchgeführt wird:
• Erfassen wenigstens eines Messwertes durch wenigstens ein Sensorelement (14), wobei das Erfassen wenigstens eines Messwerts das Erfassen eines Volumenstroms und/oder einer Fließgeschwindigkeit und/oder einer Dichte des aus der fluidführenden Rohrleitung (11) herausgeleiteten Fluidstroms (F) durch das Sensorelement (14) umfasst.

13. Verfahren (100) nach einem der Ansprüche 11 oder 12,
**dadurch gekennzeichnet,**
**dass** zusätzlich, vorzugsweise vor oder während des Schritts a), wenigstens einer der folgenden Schritte durchgeführt wird:
• Auswerten wenigstens eines durch wenigstens ein Sensorelement (14) erfassten Messwertes, vorzugsweise durch eine Auswerteeinheit (17),
• Aktivieren und/oder Deaktivieren wenigstens einer Alarmfunktion in Abhängigkeit wenigstens eines Auswerteergebnisses, vorzugsweise durch eine Steuereinheit (15).

14. Verfahren (100) nach einem der Ansprüche 11 bis 13,
**dadurch gekennzeichnet,**
**dass** zusätzlich, vorzugsweise nach dem Schritt a), wenigstens einer der folgenden Schritte durchgeführt wird:
• Erstellen wenigstens eines Datensatzes umfassend wenigstens eine Fluidinformation, insbesondere durch eine Steuereinheit (15) oder Kommunikationseinheit (16),
• Signieren des wenigstens einen Datensatzes, vorzugsweise mit einer digitalen Signatur,
• Übermitteln des wenigstens eines Datensatzes an ein mobiles Gerät (25) und/oder an einen zentralen Server,
• Speichern wenigstens eines Datensatzes auf dem mobilen Gerät (25) und/oder dem zentralen Server.

15. Verfahren (100) nach einem der Ansprüche 11 bis 14,
**dadurch gekennzeichnet,**
**dass** die Fluidinformation wenigstens einen der folgenden Parameter enthält:
• Die Gesamtmasse und/oder das Gesamtvolumen des aus der fluidführenden Rohrleitung (11) herausgeleitetes Fluidstroms (F),
• die geografische Position, an der sich die Blasensetzvorrichtung (10) während Schritt a) befunden hat.

## Claims

1. Bubble setting device (10) for at least temporarily blocking and at least partially emptying at least one fluid-carrying pipe (11)
comprising at least one collecting container (12) for at least partially collecting a fluid flow (F) which can be led out of the fluid-carrying pipe (11) by the bubble setting device (10), **characterized in that**
at least one sensor element (14) is included, wherein a volume flow and/or a flow velocity and/or a mass flow of the fluid flow (F) discharged from the fluid-carrying pipe (11) can be detected by the sensor element.

2. Bubble setting device (10) for at least temporarily blocking and at least partially emptying at least one fluid-carrying pipe (11)
comprising at least one gas flare (13) for at least partially burning off a fluid flow (F) which can be led out of the fluid-carrying pipe (11) through the bubble setting device (10), **characterized in that**
at least one sensor element (14) is included, wherein a volume flow and/or a flow velocity and/or a mass flow of the fluid flow (F) discharged from the fluid-carrying pipe (11) can be detected by the sensor element.

3. Bubble setting device (10) according to one of the preceding claims,
**characterized in that**
at least one sensor element (14) is included, wherein at least one temperature and/or one pressure and/or one density of the fluid flow (F) discharged from the fluid-carrying pipe (11) can be detected, preferably continuously, by the sensor element (14).

4. Bubble setting device (10) according to one of the preceding claims,
**characterized in that**
at least one sensor element (14) is included, wherein at least one concentration, preferably a natural gas concentration, in the fluid flow (F) discharged from the fluid-carrying pipe (11) can be detected, preferably continuously, by the sensor element (14), and/or
**in that** at least one sensor element (14) is included, it being possible for at least one item of position information relating to the current geographical position of the bubble setting device (10) to be detected by the sensor element (14).

5. Bubble setting device (10) according to one of the preceding claims,
**characterized in that**
at least one sensor element (14) is included, wherein at least one leakage flow emerging from the bubble setting device (10) can be detected by the sensor element (14), and/or
at least one control unit (15) for at least partially automated control of the bubble setting device (10) is included.

6. Bubble setting device (10) according to one of the preceding claims,
**characterized in that**
at least one communication unit (16) is included, the communication unit (16) having at least one communication interface for wireless or wired communication with at least one mobile device (25) and/or at least one central server and/or at least one sensor element (14) of the bubble setting device (10).

7. Bubble setting device (10) according to one of the preceding claims,
**characterized in that**
at least one evaluation unit (17) for evaluating at least one sensor data set is included, and/or
at least one alarm unit (18) for at least temporarily emitting acoustic and/or optical warning signals is included.

8. Bubble setting device (10) according to one of the preceding claims,
**characterized in that**
at least one mixing device (19) is included for mixing the fluid flow (F) discharged from the fluid-carrying pipe (11) with at least one further fluid (F) introduced into the mixing device (19), and/or
at least one fluid conveying device (20) is included for at least partial evacuation of the fluid-carrying pipe (11) and/or for at least partial evacuation of the collecting container (12).

9. Bubble setting device (10) according to one of the preceding claims,
**characterized in that**
at least one securing element (21) for at least temporarily fixing the bubble setting device (10) to the fluid-carrying pipe (11) is included.

10. System (50) for at least temporarily blocking and/or at least partially emptying at least one fluid-carrying pipe (11), comprising at least two bubble setting devices (10), wherein at least one bubble setting device (10) is designed according to one of claims 1 - 9.

11. A method (100) for using at least one bubble setting device (10) according to any one of claims 1 or 3-9, if dependent on claim 1, wherein at least the following steps are carried out, preferably in the order indicated:
a) conducting (101) a fluid flow (F) out of a fluid-carrying pipe (11) through the bubble setting device (10) and
b) at least partial collection (102) of the fluid flow (F) discharged from the fluid-carrying pipe (11) in a collecting container (12),
whereby the following step is also performed:
• detection of at least one measured value by at least one sensor element (14), wherein the detection of at least one measured value comprises the detection of a volume flow and/or a flow velocity and/or a density of the fluid flow (F) discharged from the fluid-carrying pipe (11) by the sensor element (14).

12. A method (100) for using at least one bubble setting device (10) formed according to any one of claims 2 or 3-9, if dependent on claim 2, wherein at least the following steps are performed, preferably in the order indicated:
a) conducting (101) a fluid flow (F) out of a fluid-carrying pipe (11) through the bubble setting device (10) and
c) at least partial burning off (103) of the fluid flow (F) discharged from the fluid-carrying pipe (11) by a gas flare (13),
whereby the following step is also carried out:
• detection of at least one measured value by at least one sensor element (14), wherein the detection of at least one measured value comprises the detection of a volume flow and/or a flow velocity and/or a density of the fluid flow (F) discharged from the fluid-carrying pipe (11) by the sensor element (14).

13. Method (100) according to any one of claims 11 or 12,
**characterized in that**
in addition, preferably before or during step a), at least one of the following steps is carried out:
• evaluation of at least one measured value detected by at least one sensor element (14), preferably by an evaluation unit (17),
• activation and/or deactivation of at least one alarm function as a function of at least one evaluation result, preferably by a control unit (15).

14. Method (100) according to any one of claims 11 to 13,
**characterized in that**
in addition, preferably after step a), at least one of the following steps is carried out:
• creation of at least one data set comprising at least one fluid information item, in particular by a control unit (15) or communication unit (16),
• signing the at least one data set, preferably with a digital signature,
• transmitting the at least one data set to a mobile device (25) and/or to a central server,
• storing at least one data set on the mobile device (25) and/or the central server.

15. Method (100) according to any one of claims 11 to 14,
**characterized in that**
the fluid information contains at least one of the following parameters:
• the total mass and/or the total volume of the fluid flow (F) discharged from the fluid-carrying pipe (11),
• the geographical position at which the bubble setting device (10) was located during step a).

## Revendications

1. Dispositif de pose de vessie (10) pour bloquer au moins temporairement et vider au moins par sections au moins une conduite tubulaire (11) conduisant un fluide comprenant au moins un récipient collecteur (12) pour recueillir au moins partiellement un courant de fluide (F) pouvant être évacué de la conduite tubulaire (11) conduisant le fluide par le dispositif de pose de vessie (10),
**caractérisé en ce que**
le dispositif de pose de vessie (10) comprend au moins un élément de détection (14), l'élément de détection permettant de détecter un débit volumique et/ou une vitesse d'écoulement et/ou un débit massique du courant de fluide (F) sortant de la conduite tubulaire (11) conduisant le fluide.

2. Dispositif de pose de vessie (10) pour bloquer au moins temporairement et vider au moins par sections au moins une conduite tubulaire (11) conduisant un fluide comprenant au moins une torche à gaz (13) pour brûler au moins partiellement un courant de fluide (F) pouvant être évacué par le dispositif de pose de vessie (10) hors de la conduite tubulaire (11) conduisant le fluide,
**caractérisé en ce que**
le dispositif de pose de vessie (10) comprend au moins un élément de détection (14), l'élément de détection permettant de détecter un débit volumique et/ou une vitesse d'écoulement et/ou un débit massique du courant de fluide (F) sortant de la conduite tubulaire (11) conduisant le fluide.

3. Dispositif de pose de vessie (10) selon l'une quelconque des revendications précédentes, **caractérisé en ce qu'**
il comprend au moins un élément de détection (14), l'élément de détection (14) permettant de détecter, de préférence en continu, au moins une température et/ou une pression et/ou une densité du courant de fluide (F) sortant de la conduite tubulaire (11) conduisant le fluide.

4. Dispositif de pose de vessie (10) selon l'une quelconque des revendications précédentes, **caractérisé en ce qu'**
il comprend au moins un élément de détection (14), l'élément de détection (14) permettant de détecter, de préférence en continu, au moins une concentration, de préférence une concentration de gaz naturel, dans le courant de fluide (F) sortant de la conduite tubulaire (11) conduisant le fluide, et/ou
**en ce qu'**il comprend au moins un élément de détection (14), au moins une information de position concernant la position géographique actuelle du dispositif de pose de vessie (10) pouvant être détectée par l'élément de détection (14).

5. Dispositif de pose de vessie (10) selon l'une quelconque des revendications précédentes, **caractérisé en ce qu'**
il comprend au moins un élément de détection (14), l'élément de détection (14) permettant de détecter au moins un courant de fuite sortant du dispositif de pose de vessie (10), et/ou en ce qu'au moins une unité de commande (15) est comprise pour la commande au moins partiellement automatisée du dispositif de pose de vessie (10).

6. Dispositif de pose de vessie (10) selon l'une quelconque des revendications précédentes, **caractérisé en ce qu'**
il comprend au moins une unité de communication (16), l'unité de communication (16) présentant au moins une interface de communication pour la communication sans fil ou avec fil avec au moins un appareil mobile (25) et/ou au moins un serveur central et/ou au moins un élément de détection (14) du dispositif de pose de vessie (10).

7. Dispositif de pose de vessie (10) selon l'une quelconque des revendications précédentes, **caractérisé en ce qu'**
au moins une unité d'évaluation (17) est comprise pour évaluer au moins un ensemble de données de capteur, et/ou
qu'au moins une unité d'alarme (18) est comprise pour l'émission au moins temporaire de signaux d'avertissement acoustiques et/ou optiques.

8. Dispositif de pose de vessie (10) selon l'une quelconque des revendications précédentes, **caractérisé en ce qu'**
il comprend au moins un dispositif de mélange (19) pour mélanger le courant de fluide (F) évacué de la conduite tubulaire (11) conduisant le fluide avec au moins un autre fluide (F) introduit dans le dispositif de mélange (19), et/ou
qu'au moins un dispositif de transport de fluide (20) est compris pour la mise sous vide au moins partielle de la conduite tubulaire (11) conduisant le fluide et/ou pour la mise sous vide au moins partielle du récipient collecteur (12).

9. Dispositif de pose de vessie (10) selon l'une quelconque des revendications précédentes, **caractérisé en ce qu'**
au moins un élément de sécurité (21) est compris pour la fixation au moins temporaire du dispositif de pose de vessie (10) sur la conduite tubulaire (11) conduisant le fluide.

10. Système (50) pour le blocage au moins temporaire et/ou la vidange au moins partielle d'au moins une conduite tubulaire (11) conduisant un fluide, comprenant au moins deux dispositifs de pose de vessie (10), au moins un dispositif de pose de vessie (10) étant réalisé selon l'une des revendications 1 à 9.

11. Procédé (100) d'utilisation d'au moins un dispositif de pose de vessie (10) formé selon l'une quelconque des revendications 1 ou 3 à 9, si elle est dépendante de la revendication 1, dans lequel au moins les étapes suivantes sont effectuées, de préférence dans l'ordre indiqué :
a) l'évacuation (101) d'un flux de fluide (F) d'une conduite tubulaire (11) conduisant le fluide à travers le dispositif de pose de vessie (10) et
b) recueillir (102) au moins partiellement le flux de fluide (F) évacué de la conduite tubulaire (11) conduisant un fluide dans un récipient collecteur (12),
l'étape suivante étant en outre effectuée :
• détection d'au moins une valeur de mesure par au moins un élément de détection (14), la détection d'au moins une valeur de mesure comprenant la détection par l'élément de détection (14) d'un débit volumique et/ou d'une vitesse d'écoulement et/ou d'une densité du flux de fluide (F) évacué de la conduite tubulaire (11) conduisant le fluide.

12. Procédé (100) d'utilisation d'au moins un dispositif de pose de vessie (10) réalisé selon l'une quelconque des revendications 2 ou 3 à 9 lorsqu'elles dépendent de la revendication 2, dans lequel au moins les étapes suivantes sont réalisées, de préférence dans l'ordre indiqué :
a) l'évacuation (101) d'un flux de fluide (F) d'une conduite tubulaire (11) conduisant le fluide à travers le dispositif de pose de vessie (10) et
c) combustion (103) au moins partielle du flux de fluide (F) évacué de la conduite tubulaire (11) conduisant le fluide par une torche à gaz (13),
où on effectue en outre l'étape suivante :
• l'acquisition d'au moins une valeur de mesure par au moins un élément de détection (14), l'acquisition d'au moins une valeur de mesure comprenant l'acquisition par l'élément de détection (14) d'un débit volumique et/ou d'une vitesse d'écoulement et/ou d'une densité du flux de fluide (F) sortant de la conduite tubulaire (11) conduisant le fluide.

13. Procédé (100) selon l'une des revendications 11 ou 12,
**caractérisé en ce que**
l'on effectue en outre, de préférence avant ou pendant l'étape a), au moins l'une des étapes suivantes :
• l'évaluation d'au moins une valeur de mesure saisie par au moins un élément de détection (14), de préférence par une unité d'évaluation (17),
• l'activation et/ou la désactivation d'au moins une fonction d'alarme en fonction d'au moins un résultat d'évaluation, de préférence par une unité de commande (15).

14. Procédé (100) selon l'une quelconque des revendications 11 à 13,
**caractérisé en ce que**
l'on effectue en outre, de préférence après l'étape a), au moins l'une des étapes suivantes :
• la création d'au moins un ensemble de données comprenant au moins une information de fluide, en particulier par une unité de commande (15) ou une unité de communication (16),
• signer l'au moins un ensemble de données, de préférence avec une signature numérique,
• transmettre l'au moins un ensemble de données à un dispositif mobile (25) et/ou à un serveur central,
• le stockage d'au moins un ensemble de données sur le dispositif mobile (25) et/ou le serveur central.

15. Procédé (100) selon l'une quelconque des revendications 11 à 14,
**caractérisé en ce que**
l'information de fluide comprend au moins l'un des paramètres suivants :
• la masse totale et/ou le volume total de l'écoulement de fluide (F) évacué de la conduite tabulaire (11),
• la position géographique dans laquelle le dispositif de pose de vessie (10) se trouvait pendant l'étape a).
